# EUROPEAN PATENT APPLICATION

(11) **EP 4 738 219 A1**
(43) Date of publication of application: **06.05.2026**
(21) Application number: 25212087.8
(22) Date of filing: 29.10.2025
(51) Int. Cl.: G06Q 10/1057, G06Q 10/1091, G06F 9/50, G06F 9/451, G06Q 10/06, G06Q 40/12

(54) **INTERSYSTEM CONFIGURATION ADJUSTMENTS FOR OPERATION PROCESSING**

(30) Priority: 30.10.2024 US 202463713995 P
(71) Applicant: ADP, Inc., Roseland, NJ 07068 (US)
(72) Inventor: SAO, Sanket, Roseland, 07068 (US); SINGHVI, Himanshu P., Roseland, 07068 (US); MANGE, Dimple, Roseland, 07068 (US); ANGELILLO, Mark C., Roseland, 07068 (US); BAUMANN, William, Roseland, 07068 (US); BALAKRISHNAN, Raviragul, Roseland, 07068 (US)
(74) Representative: Morrall, Jonathan Ian McLachlan

(57) **Abstract**

Technical solutions are directed to an intersystem configuration adjustment for periodic operation processing. A processor can receive, from an entity system, a value for a parameter of a client account. The system can determine, based on a configuration for an entity associated with the client account, to perform parameter adjustment according to a protocol of the configuration and identify a rule for parameter adjustment. The system can split, using the rule and based on an accumulated parameter value, the value for the parameter into component values. The system can assign, according to ranking of modifiers, a modifier to each of the components values and generate an adjusted parameter value. The system can command the processing system to execute a process for the client account and the time interval based on the adjusted parameter value.

## Description

### CROSS-REFERENCES TO RELATED APPLICATIONS

This application claims priority under 35 U.S.C. § 119 to a U.S. Provisional Patent Application No. 63/713,995, titled "INTERSYSTEM CONFIGURATION ADJUSTMENTS FOR OPERATION PROCESSING," and filed October 30, 2024, which is hereby incorporated by reference herein in its entirety and for all purposes.

### TECHNICAL FIELD

This application is generally related to computing technology, and particularly to a computing technology solution for providing intersystem operation processing adjustments based on rule configurations.

### BACKGROUND

Servers can process tasks in a batch mode to improve computing processing efficiencies. However, due to complex data interactions and transactional workflows across digital environments, it can be challenging to accurately, efficiently, and reliably execute batch mode processing if changes to parameters are made during a batch mode time interval.

### SUMMARY

The technical solutions described herein can provide dynamic entity configuration adjustments for intersystem periodic operation processes. The entity configuration can be rule-based, machine-learning-based, or in other ways described herein, to facilitate the configuration adjustments automatically and substantially in real-time. In a multi-system computing environment, automated periodic operations executed by processing systems on behalf of entity systems can use parameter values linked to entity electronic accounts. These parameters can sometimes be subject to change during the period for which scheduled periodic operations are performed. Such intra-periodic changes of the parameters can result in discrepancies between the entity and operation processing systems, leading to errors in resource assignment operations computing resources at intervals that have a different granularity than those of the designated processing operations. These discrepancies and the resulting errors can increase the computational and energy resource usage, and compromise system reliability and efficiency.

To mitigate these issues, the technical solutions described herein provide entity-specific configurations that decompose modified parameter values into adjustable components governed by ranked modifiers. By integrating these modifiers with the parameter components, the system can produce adjusted parameter values that accommodate intra-periodic changes, reducing computational errors and addressing the inter-system discrepancies. In doing so, the technical solutions improve the system-to-system operations while implementing rule-based quality control, improving the overall system performance and the efficiency of computational and energy resources.

An aspect of the technical solutions can be directed to a system. The system can include one or more processors coupled with memory. The one or more processors can be configured (e.g., via instructions and data stored in the memory) to receive, from an entity system, a value for a parameter of a client account associated with a processing system. The parameter can be associated with a time interval of a plurality of time intervals. The one or more processors can be configured to determine, based on a configuration for an entity associated with the client account, to perform parameter adjustment according to a protocol of the configuration. The protocol can be configured to utilize a setting identifying a first rate for a first range of values of the parameter and a second rate for a second range of values of the parameter. The protocol can be configured to utilize a threshold value for the parameter to select between the first rate and the second rate based on an accumulated value of the parameter over the plurality of time intervals. The one or more processors can be configured to split, using the setting and the threshold value, and based on the accumulated parameter value of the client account for the plurality of time intervals, the value for the parameter into a plurality of component values. The one or more processors can be configured to assign, according to a ranking associated with a plurality of modifiers, one or more modifiers of the plurality of modifiers to one or more component values of the plurality of component values. The one or more modifiers can be associated with at least one of the first rate or the second rate. The one or more processors can be configured to generate, using the one or more component values adjusted using the one or more modifiers according to the at least one of the first rate or the second rate, one or more adjusted parameter values for the time interval. The one or more processors can be configured to command a processing system to execute a process to determine, using the one or more adjusted parameter values, an amount of resources to apply to the client account for the time interval. The one or more processors can be configured to store the amount of resources for the time interval in a memory location associated with the client account.

The one or more processors can be configured to identify, for the client account, a plurality of values comprising the value for a plurality of parameters comprising the parameter. The plurality of parameters can correspond to the plurality of time intervals. The one or more processors can be configured to determine, based on the plurality of values and the configuration of the entity, to perform parameter adjustment. The parameter adjustment can include modifying one or more component values of the plurality of component values, wherein a sum of the plurality of component values is equal to the value for the parameter received from the entity system.

The one or more processors can be configured to provide for display, to a user interface, ranking for the plurality of modifiers to use for modifying the plurality of component values. The one or more processors can be configured to receive, via the user interface, an input associated with the ranking. The one or more processors can be configured to modify the ranking of the plurality of modifiers based on the input. The one or more processors can be configured to identify a regulation corresponding to a geographical area. The one or more processors can be configured to detect that the client account corresponds to the geographical area. The one or more processors can be configured to select, responsive to the detection, the protocol.

The one or more processors can be configured to determine that the ranking of the one or more modifiers results in an adjusted parameter value of the one or more adjusted parameter values that is lower than a second adjusted parameter value determined according to a second ranking of the one or more modifiers. The one or more processors can be configured to assign the one or more modifiers to the one or more component values responsive to the adjusted parameter value being lower than the second adjusted parameter value.

The one or more processors can be configured to provide for display, to a user interface, the plurality of component values. The one or more processors can be configured to receive, via the user interface, an input corresponding to at least a component value of the plurality of component values. The one or more processors can be configured to modify at least the component value based on the input. The process can be configured to update the accumulated parameter value using the value for the parameter. The updated accumulated parameter value can correspond to the plurality of time intervals and the time interval.

The value for the parameter can correspond to a number of hours worked for the entity within the time interval corresponding to a pay cycle and the accumulated parameter value can correspond to a sum of hours worked for the entity within the plurality of time intervals corresponding to a fiscal year. The one or more modifiers can include a plurality of modifiers corresponding to a plurality of rates of resources to combine with a plurality of components. The plurality of rates can comprise the first rate and the second rate.

The one or more processors can be configured to generate, using the one or more component values and the one or more modifiers, a command configured to cause the process to determine the amount of resources according to a setting. The setting can be configured to generate the one or more component values according to the first rate corresponding to a beginning of the time interval. The setting can be configured to generate the one or more component values according to the second rate corresponding to an end of the time interval. The setting can be configured to generate, based on the threshold value, a first component value of the one or more component values according to the first rate and a second component value of the one or more component values according to the second rate.

An aspect of the technical solutions can be directed to a method. The method can include one or more processors coupled with memory receiving, from an entity system, a value for a parameter of a client account associated with a processing system. The parameter can be associated with a time interval corresponding to a plurality of time intervals. The method can include the one or more processors determining, based on a configuration for an entity associated with the client account, to perform parameter adjustment according to a protocol of the configuration. The protocol can be configured to utilize a setting identifying a first rate for a first range of values of the parameter and a second rate for a second range of values of the parameter. The protocol can be configured to utilize a threshold value for the parameter to select between the first rate and the second rate based on an accumulated value of the parameter over the plurality of time intervals. The method can include the one or more processors splitting, using the setting and the threshold value, and based on the accumulated parameter value of the client account for the plurality of time intervals, the value for the parameter into a plurality of component values. The method can include the one or more processors assigning, according to a ranking associated with a plurality of modifiers, one or more modifiers of the plurality of modifiers to one or more component values of the plurality of component values. The one or more modifiers can be associated with at least one of the first rate or the second rate. The method can include the one or more processors generating, using the one or more component values adjusted using the one or more modifiers according to the at least one of the first rate or the second rate, one or more adjusted parameter values for the time interval. The method can include the one or more processors commanding, a processing system to execute a process to determine, using the one or more adjusted parameter values, an amount of resources to apply to the client account for the time interval. The method can include the one or more processors storing the amount of resources for the time interval in a memory location associated with the client account.

The method can include identifying, by the one or more processors, for the client account, a plurality of values comprising the value for a plurality of parameters comprising the parameter. The plurality of parameters can correspond to the plurality of time intervals. The method can include the one or more processors determining, based on the plurality of values and the configuration of the entity, to perform parameter adjustment. The method can include modifying, by the one or more processors, one or more component values of the plurality of component values. A sum of the plurality of component values can be equal to the value for the parameter received from the entity system.

The method can include providing, by the one or more processors, for display, to a user interface, ranking for the plurality of modifiers to use for modifying the plurality of component values. The method can include receiving, by the one or more processors, via the user interface, an input associated with the ranking. The method can include modifying, by the one or more processors, the ranking of the plurality of modifiers based on the input. The method can include identifying, by the one or more processors, a regulation corresponding to a geographical area. The method can include detecting, by the one or more processors, that the client account corresponds to the geographical area. The method can include selecting, by the one or more processors, responsive to the detection, the protocol.

The method can include determining, by the one or more processors, that the ranking of the one or more modifiers results in an adjusted parameter value of the one or more adjusted parameter values that is lower than a second adjusted parameter value determined according to a second ranking of the one or more modifiers. The method can include assigning, by the one or more processors, the one or more modifiers to the one or more component values responsive to the adjusted parameter value being lower than the second adjusted parameter value.

The method can include providing, by the one or more processors, for display, to a user interface, the plurality of component values. The method can include receiving, by the one or more processors, via the user interface, an input corresponding to at least a component value of the plurality of component values. The method can include modifying, by the one or more processors, at least the component value based on the input. The method can include updating, by the one or more processors, via the process, the accumulated parameter value using the value for the parameter. The updated accumulated parameter value can correspond to the plurality of time intervals and the time interval.

An aspect of the technical solutions can be directed to a non-transitory computer readable medium storing processor executable instructions. The instructions, when executed by one or more processors, can cause the one or more processors to receive, from an entity system, a value for a parameter of a client account associated with a processing system. The parameter can be associated with a time interval corresponding to a plurality of time intervals. The instructions, when executed by one or more processors, can cause the one or more processors to determine, based on a configuration for an entity associated with the client account, to perform parameter adjustment according to a protocol of the configuration. The protocol can be configured to utilize a setting identifying a first rate for a first range of values of the parameter and a second rate for a second range of values of the parameter. The protocol can be configured to utilize a threshold value for the parameter to select between the first rate and the second rate based on an accumulated value of the parameter over the plurality of time intervals. The instructions, when executed by one or more processors, can cause the one or more processors to split, using the setting and the threshold value, and based on the accumulated parameter value of the client account for the plurality of time intervals, the value for the parameter into a plurality of component values. The instructions, when executed by one or more processors, can cause the one or more processors to assign, according to a ranking associated with a plurality of modifiers, one or more modifiers of the plurality of modifiers to one or more component values of the plurality of component values. The one or more modifiers can be associated with at least one of the first rate or the second rate. The instructions, when executed by one or more processors, can cause the one or more processors to generate, using the one or more component values adjusted using the one or more modifiers according to the at least one of the first rate or the second rate, one or more adjusted parameter values for the time interval. The instructions, when executed by one or more processors, can cause the one or more processors to command a processing system to execute a process to determine, using the one or more adjusted parameter values, an amount of resources to apply to the client account for the time interval. The instructions, when executed by one or more processors, can cause the one or more processors to store the amount of resources for the time interval in a memory location associated with the client account.

### BRIEF DESCRIPTION OF THE DRAWINGS

Aspects of the technical solutions are described in the detailed description which follows, in reference to the noted plurality of drawings by way of non-limiting examples of exemplary embodiments of the technical solutions described herein.
FIG. 1 depicts an example of a system for providing intersystem configuration adjustments for periodic operation processing.
FIG. 2 depicts an architecture of a computing system implemented in embodiments of the technical solutions described herein.
FIG. 3 depicts a cloud computing environment 300 in accordance with aspects of the technical solutions described herein.
FIGs. 4-5 depict examples windows that can be displayed in a user interface, in accordance with some embodiments.
FIGs. 6-8 depict examples of a user interface 104 that can be displayed on a client device to facilitate user selections or inputs.
FIG. 9 depicts a flow diagram of a method for providing intersystem configuration adjustments for periodic operation processing.
FIGs. 10A-10B depict example configurations for accumulator prioritization and step progression, as utilized in an example resource adjustment system.
FIGs. 11A-11C depict example views of resource profiles, illustrating data flows and structures for step progression processing.
FIG. 12 depicts a flow diagram of a method for step progression resource processing.
FIGs. 13A-13D depict example user interface views for payroll management, worksheet review, payroll input tracking, and calculated results analysis.
FIGs. 14A-14C depict an example flow diagram for step progression resource determination in view of user or practitioner options.

### DETAILED DESCRIPTION

Following below are more detailed descriptions of various concepts related to, and implementations of, methods, apparatuses, and systems provide intersystem configuration adjustment for periodic operation processing. The various concepts introduced above and discussed in greater detail below can be implemented in any of numerous ways.

The technical solutions described herein provide rule-based entity configuration adjustments for intersystem periodic operation processes. For example, a system can include servers configured to execute resource computation processes on data received from various entities (e.g., organizations or enterprises). These processes can be implemented in a batch mode to improve processing efficiencies. However, due to complex data interactions and transactional workflows across digital environments (e.g., variations in employee compensation, leave entitlements or retirement contributions, as well as rules governing these), it can be challenging to maintain accurate and reliable resource computations when parameter values change during a batch processing interval. These parameter changes within an ongoing processing period can result in discrepancies between systems, leading to errors in resource assignments and increased computational overhead, degrading system reliability and computational and energy efficiency.

The technical solutions described herein can overcome these challenges by dynamically adjusting entity-specific configuration parameters in intersystem operation processing to maintain accurate resource computations even with the intra-periodic parameter changes. Specifically, the technical solutions can determine, based on a configuration for the entity, when a parameter adjustment is to be performed according to protocol settings and thresholds identifying which rates are to be applied to which resource parameter value ranges. The solutions can split a resource parameter into a plurality of component values and assigns ranked modifiers to each component value according to a defined ranking protocol. The solutions can then generate adjusted parameter values for the relevant time intervals, accounting for the intra-periodic changes and any resulting changes in the resource computing rates. The system can then command a resource processing system to compute the amount of resources to apply and store the resulting resource amounts in memory for future client account use. In doing so, the technical solutions maintain the accuracy and reliability of the resource computations throughout the processing period, including when parameter values experience intra-periodic changes.

For example, a resource processing system can be configured to execute resource operations in a batch mode, leveraging entity-specific configuration adjustments to maintain the processing operations. Depending on the design, such a system can be configured to manage complex data interactions and transactional workflows, allowing for execution of periodic operations. These periodic operations can be performed by processing systems on behalf of entity systems utilizing parameter values associated with specific electronic accounts. These parameter values, or their corresponding rates or parameter multipliers, may be updated during the scheduled operation period, and such intra-periodic changes can introduce discrepancies between the entity and the processing system, leading to computational errors or increased use of computing resources.

To address these issues, the system can be configured to decompose modified parameter values into individual components, each associated with their own ranks and rate-based modifiers, determined based on a threshold. By integrating these modifiers with the parameter components, the system can generate adjusted parameter values that reflect intra-periodic changes, while still utilizing the resource processing system for its scheduled periodic resource processing. This results in more accurately performing resource computations with fewer system computations, despite occurrence of parameter value intra-periodic changes. In doing so, the technical solutions both reduce or eliminate computational errors when intra-periodic parameter value changes arise, while also improving the overall performance and efficiency of computational and energy resources.

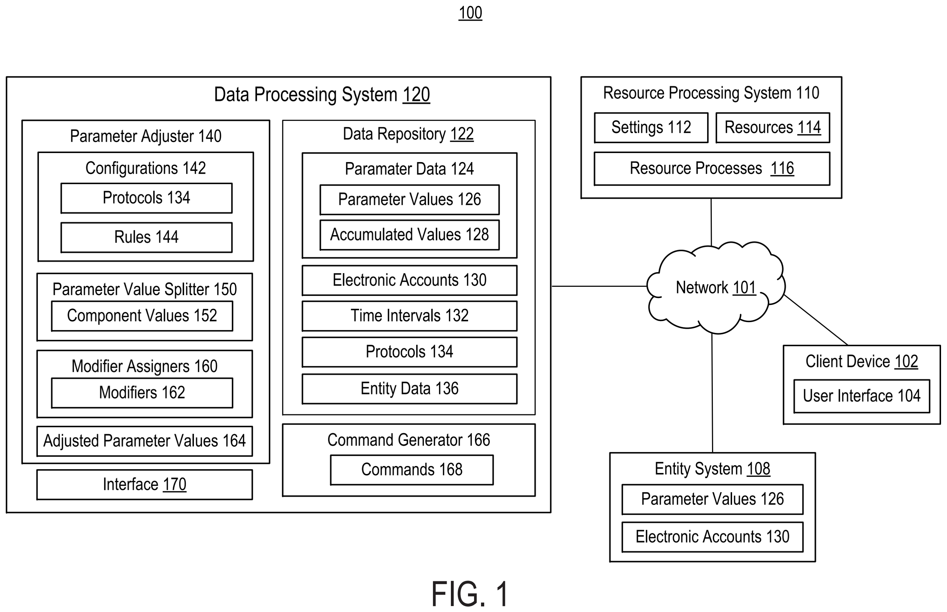

FIG. 1 depicts an example system 100 for providing intersystem configuration adjustment for periodic operation processing adjusted for intra-periodic parameter changes. The system 100 can include one or more data processing systems 120 that can access or communicate with (e.g., via network 101) any one or more of resource processing systems 110, entity systems 108 or client devices 102. For instance, a resource processing system 110 can include or utilize one or more entity-specific settings 112 to process one or more resources 114 using one or more resource processes 116. Entity system 108 can include, track, monitor, generate or provide one or more parameter values 126 (e.g., resource counts, such as employee hours worked) that can be associated with one or more electronic accounts 130 (e.g., associated with one or more employees of the entity). Client device 102 can execute one or more user interfaces 104 configured to receive user inputs and display outputs that can be used for operations of the data processing system 120 or resource processing system 110. Each of the data processing system 120, the resource processing system 110, the entity system 108, or the client device 102 can include, utilize or be processed using one or more processors (e.g., 215) coupled with memory (e.g., 225) of a computing system or environment, and can be provided on the same or different computational platforms (e.g., computing servers or cloud-based environments).

The data processing system 120 can include, access, manage or provide one or more data repositories 122 for storing, maintaining or providing access to one or more of: parameter data 124, electronic accounts 130, time intervals 132, protocols 134 or entity data 136. Parameter data 124 can include one or more of parameter values 126 (e.g., a value for a resource, such as employee hours worked, for a given processing time interval) and one or more accumulated values 128 (e.g., accumulated value for the total hours worked within a larger time period, such as a fiscal year). Data processing system 120 can include, execute, operate or provide one or more parameter adjusters 140 for performing parameter adjustments, one or more command generators 166 for generating commands 168 to resource processing systems 110, and one or more interfaces 170 for interfacing via the network 101. The parameter adjuster 140 can include one or more configurations 142 for performing resource computations. The configurations 142 can each correspond to one or more protocols 134 and corresponding rules 144 according to which resource computations are performed. Parameter adjuster 140 can include one or more parameter value splitters 150 for generating or providing component values 152, one or more modifier assigners 160 for providing or generating modifiers 162 to determine or generate one or more adjusted parameter values 164. Command generator 166 can be configured to generate or issue one or more commands 168, providing the adjusted parameter values 164 for completion of resource processes 116 by the resource processing system 110. The resource processing system 110 can include, manage, utilize or process one or more settings 112 to process the transactions associated with the resources 114 according to resource processes 116 and the provided adjusted parameter values 164.

For example, the data processing system 120 can receive, from an entity system 108, a communication comprising a parameter value 126. The parameter value 126 can be a value of a number of employee hours worked within a particular time interval 132, such as a pay period (e.g., a week). The parameter value 126 can be associated with a client account 130, such as an account of an employee of a particular entity (e.g., enterprise or corporation) associated with an entity system 108. This parameter value 126 can be stored and managed within a data repository 122, where both current and accumulated values 128 (e.g., accumulated sum of prior parameter values 126) can be aggregated and maintained over time and for ongoing resource computations by the resource processing system 110. The data processing system 120 can access these values (e.g., 126 or 128) and, based on a configuration 142 for the relevant entity, utilize a parameter adjuster 140 to determine whether a parameter adjustment should be performed. The parameter adjustments can be performed based on configurations 142 defining one or more protocols 134 using associated rules 144. For instance, a protocol can utilize settings 112 that identify a first rate (e.g., a first hourly payment rate) for a first range of parameter values 126 (e.g., parameter values up to a particular threshold amount defined by a rule 144), as well as a second rate for a second range (e.g., second hourly payment rate) for a second range of parameter values 126. The protocol 134 can also identify the threshold value, which can be defined or provided by a rule 144, indicating a threshold for the accumulated employee hours below which the first rate is utilized and at or above which the second rate is utilized to compute the resources due to the electronic account 130 associated with the employee.

The parameter adjuster 140 can determine if the received parameter value 126, when added to the existing accumulated value 128 for the electronic account 130, exceeds the threshold value between the first rate and the second rate. In response to determining that the threshold value is exceeded, the parameter adjuster 140 can employ a parameter value splitter 150 to divide the received parameter value into a plurality of component values 152, using the applicable setting and the threshold to determine which portion of the parameter values 126 (e.g., hours) are to be computed according to the first rate and which portion of the parameter values 126 (e.g., hours) are to be computed using the second rate. These component values 152 into which the parameter value 126 is split, can be assigned, determined or arranged, by the modifier assigner 160, according to a ranking associated with a plurality of modifiers 162. The modifiers 162 can be linked to one or more of the applicable rates, such as the first rate and the second rate, and can be selected to compute the resource allocation for the electronic account 130, based on the protocol 134 or rules 144. Using these rankings, the data processing system 120 can utilize the parameter adjuster 140 to generate one or more adjusted parameter values 164 for the relevant time interval. The adjusted parameter values 164 can account for the changes in the rates for different portions of the parameter values 126 (e.g., portion of hours determined according to the first rate and portion of hours determined according to the second rate) to allow the resource processing system 110 to accurately determine resources 114 due to the electronic account 130 using resource processes 116.

For instance, once the adjusted parameter values 164 are determined, a command generator 166 can issue one or more commands 168 to the resource processing system 110, directing the resource processing system 110 to execute resource processes 116 that calculate the amount of resources 114 to be applied to the client account for the specified time interval 132. The resulting resource amounts provided by the resource processing system 110 can be stored in the data repository 122 in association with the electronic account 130 of the client. In doing so, the technical solutions allow for an adjusted and accurate computation of electronic account resources even when parameter values 126 experience rate changes during within the computational period.

The data processing system 120 can include, or be communicatively coupled with (e.g., via a network 101), at least one logic device such as a resource processing system 110. The resource processing system 110 can include any combination of hardware and software for implementing resource processing using parameter and configuration adjustments from the data processing system 120. The resource processing system 110 can include, or be executed on, any computing device (e.g., a server) having a processor (e.g., 215) to implement resource process 116 for processing transactions involving any type and form of resources 114 according to various settings 112. The resource processing system 110 can include, be executed on, or utilize, one or more servers, processors or memories and can be communicatively coupled with the data processing system 120, entity system 108 or the client device 102, either directly or via one or more networks 101. The resource processing system 110 can included within, may include the data processing system 120, or can be deployed remotely from the data processing system 120.

The resource processing system 110 can process information or data involving various entities, such as entity data 136 of various entity systems 108. For example, entity system 108 can transmit, for each client account 130, a value for a parameter 126 (such as hours worked) associated with a specific time interval 132. These values can be received and stored in data repository 122 for subsequent processing. Entity systems 108 can include computing devices or services configured for services of various entities, such as corporations or organizations on behalf of which resource processes 116 can be executed for various electronic accounts 130 of users, such as employees of the entities. The resource processes 116 can include functions (e.g., processing applications) for executing various computations or transactions associated with resources, such as payroll, human resource or other transactional activities, which can be implemented based on parameters, rules, policies or data associated with, configured for, or specific to, individual entity systems 108. The resource processes 116 can be customized for, or according to, individual entity systems and individual electronic accounts 130 to implement certain resource processes based on entity specific agreements or regulations or rules according to various geographical locations or regions (e.g., countries, counties, states) of the entities or electronic accounts 130. Resource processing system 110 can execute resource processes 116 configured or tailored for different sections, groups or departments of the entities, or individual employees associated with such electronic accounts 130, or according to any time intervals 132.

Resource processes 116 can include any combination of hardware and software, including software applications or functions, for processing, transacting, analyzing or computing various resources 114. Resource process 116 can include an automated operation that can be configured to implement periodic transactional operations of resources 114. The resource process 116 can involve computations (e.g., cumulative addition of account related resources) which can be implemented in any time intervals 132, such as daily, weekly, biweekly, semi-monthly, monthly, bimonthly, quarterly, semi-annually or annually, and it can be determined based on configurations 142. Resource processes 116 can compute or determine operations (e.g., transactions or computations) involving resources 114 according to any number of settings 112. Resource processes 116 can be configured to provide, allocate, transfer, assign, transact or otherwise manage resources 114 on behalf of, or with respect to, any electronic accounts 130, which can be associated with any entity systems 108. For instance, the resource processes 116 can include rules or policies (e.g., establishing parameters, decision trees or limitations) for processing resources 114 for electronic accounts 130 associated with a given entity system 108.

Resource processes 116 can include, for example, any payroll or salary transaction processing functions, such as functions for processing operations for computing payroll, amount to include on pay checks, information on pay stubs, employee daily, weekly, semi-monthly or monthly salaries, bonuses, as well as medical or other benefits, including medical leaves, employee vacations or personal time off days. Resource processes 116 can implement computations or transactions involving sickness entitlement, annual leave (e.g., annual leave balances), payment plans for parental leaves, forfeit of adjustments and balances, buying and selling of leave balances, public holiday adjustments and balances, timesheet to balances, overtime computations, or any other time-related or compensation related transactions or computations. Resource processes 116 can include transactions for processing time entries, employee clock (e.g., start and stop work time), employee facility access card activity monitoring functions or any other functions associated with behavior or actions of users (e.g., employees) associated with the electronic accounts 130. For example, resource processing system 110 can utilize any resource processes 116 to perform one or more resource functions for entity systems 108, such as payroll processing functions, human resource management functions, time and attendance tracking functions, benefits administration functions, talent management functions, or analytics and reporting functions, among others.

Resource 114 can be any resource, item or value processed or computed for an electronic account 130. Resources 114 can include any representation of entitlements or assets that the resource processing system 110 can compute, process, or transact. Resources 114 can include currency, financial transaction or payment amounts, assets, such as financial compensations, bonuses, and other forms of benefits. For instance, leave entitlements can include amounts (e.g., times or days) of vacation or other employee leave entitlements, amount of entitled sick leave, annual leave or parental leave. Resources 114 can include or correspond to asset amounts, such as financial currencies, including currency amounts for salaries, bonuses, overtime payments, and other monetary rewards. Resources 114 can include assets such as training credits, purchase reimbursements, retirement plan investments, travel allowances, and stock options. Resources 114 can include non-monetary benefits like flexible working hours, wellness programs, training hours or classes and professional development opportunities.

Resources 114 can also include or correspond to assets that can be transacted, such as compensation from the entity system 108 (e.g., accounts or systems of a corporation) to the electronic account 130 (e.g., account of an employee of the corporation), including any amounts of payments for hourly wages, overtime wages (e.g., 1.5 times the hourly wage), double time wages (e.g., 2 times the hourly wage), holiday wages (e.g., any particular set rate corresponding to the hourly rate) or bonuses. Resources 114 can include leave or vacation time, retirement account contributions, investment account contributions, saving or checking account contributions, or any other type of resource contribution associated with any electronic account. For instance, a human resources personnel can use a user interface 104 on a client device 102 to send a request to process resource 114 transactions (e.g., via resource processes 116. In response, the parameter adjuster 140 can determine that parameter values 126 are subject to parameter adjustment, based on a detected change in the parameter value 126 during the time interval 132 corresponding to the payroll processing period. The parameter adjuster 140 can utilize configurations 142 according to protocols 134 and rules 144, as well as a parameter value splitter 150 to generate component values 152 and a modifier assigner 160 to determine modifiers 162, based on which adjusted parameter values 164 can be generated.

Resources 114 can include any values or parameters transacted by a resource process 116. Resources 114 can include values associated with payroll transactions or human resources processing transactions, including values correspond to monetary currencies, digital or crypto currencies or other units of value. Resources 114 can include other non-monetary items such as employee benefits (e.g., health, dental or vision insurance coverage, deductions, cost reimbursement amounts or limitations, retirement plan contributions (e.g., by the entity on behalf of the electronic account 130), or any other benefit or asset. Resources 114 can include digital assets like access permissions, software licenses, document or data access, equipment allocations, compliance metrics, performance evaluations, and training completions.

The client device 102 can include any computing device that can be used by a client, individual or a user, such as an employee, a human resources personnel or an administrator associated with an entity system 108. The client device 102 can be used by a user for inquiring about the state or status (e.g., balance) of resources 114 via resource process 116 or using operations of a data processing system 120. The client device 102 can access, trigger or utilize the functionalities associated with the parameter adjuster 140, including functionalities of a parameter value splitter 150, and modifier assigner 160. The client device 102 can receive outputs from resource processing system 110 once outputs of resource processes 116 are provided (e.g., in the units of resources 114 transacted for an electronic account 130).

The client device 102 can be or can include any computing device such as a laptop, a desktop computer, a smart phone or a tablet. A user of the client device 102 can operate, display, or otherwise execute an application (e.g., a web browser or one or more agents of the automated resource process 116 or a data processing system 120) via the client device 102. The client device 102 can be operated by a user associated with an entity system 108 to perform tasks of the entity (e.g., the corporation or organization). The client device 102 can execute one or more applications that can include platforms for performing various tasks associated with the entity system 108, such as a low-code platform, no-code platform, software-as-a-service platform (SaaS), web application, web browser, desktop application, among others.

The resource processing system 110 can utilize settings 112 for setting, configuring or adjusting the resource operations 116. For instance, settings 112 can include instructions, commands, set points or parameters for adjusting or configuring the operation of resource processes 116 according to a particular entity system 108. For example, settings 112 can include instructions, commands, set points or parameters configured based on adjusted parameter values 164. The settings 112 can be configured based on the adjusted parameter values 164 to constraint, adjust or manage operation of resource processes 116 using, based on, or according to adjusted parameter values 164.

The network 101 can be a wireless or wired connection facilitating the data processing system 120 to store, transmit, receive, or display information to identify, extract, and map a data set from a first type to a second type. The data processing system 120 can communicate with internal subcomponents (described herein), or external components (e.g., resource processing systems 110 or the client device 102, among others) via the network 101. The data processing system 120 can, for example, store data about the system in the data repository 122. The data processing system 120 can, for example, receive the data set 170 transmitted from the data repository 122. The network can include a hardwired connection (e.g., copper wire or fiber optics) or a wireless connection (e.g., wide area network (WAN), controller area network (CAN), local area network (LAN), or personal area network (PAN)). For example, the network 101 can include Wi-Fi, Bluetooth, BLE, or other communication protocols for transferring over networks as described herein.

The data processing system 120 can include a data repository 122. The data repository 122 can include any combination of hardware and software for storing information. A data repository 122 can include any memory, storage, or cache for storing information or data structures of the system 100. The data repository 122 can include or store any parameter data 124, including any parameter values 126 or accumulated values 128. The repository data 122 can include or store any information on electronic accounts 130, time intervals 132, protocols 134 or entity data 136. The information in the data repository 122 can be stored in any kind of memory, such as a cloud or hard drive. The data repository 122 can include or utilize, for example, random access memory (RAM), dynamic random-access memory (DRAM), static random-access memory (SRAM), error correcting code (ECC), read only memory (ROM), programmable read only memory (PROM), or electrically erasable read only memory (EEPROM). The information or data structures (e.g., tables, lists, or spreadsheets) contained within the data repository 122 can be dynamic and change periodically (e.g., daily or every millisecond); via information from the server (e.g., through batch processing, real-time streaming, webhooks, scheduled jobs, incremental updates, database triggers, API requests, or version control systems, among others), via an input from a user (e.g., a user operating the client device 102), via information from the data repository 122, or the client device 102, transmitted through the network 101, via inputs from subcomponents of the data processing system 120 or via an external update to the system 100.

The data repository 122 can store, maintain and provide access to the parameter data 124. The parameter data 124 can include any information, parameters or values corresponding to, or indicative of, utilization of resources 114. The parameter data 124 can be alpha-numeric, include characters of text describing resource balances or utilization over time, such as limits on the resources 114 that can be assigned or provided for the electronic account 130. The parameter data 124 can include any type of a parameter, such as, a number of hours or days worked, a number of resources 114 accrued over a time interval 132, a number of vacation days accrued or utilized by an electronic account 130 during a time interval 132, a number of billable hours provided, a number of units of product produced, a number of units of resources provided or manufactured, a percentage of a project completed, or any other parameter that can be used for computing resources 114 to be transacted or operated by the resource process 116 for an electronic account 130.

Parameter data 124 can correspond to any type of items that can be used for a resource process 116. Parameter data 124 can correspond to data about work hours or days accrued for a salary, wages, bonuses, overtime pay, commissions, benefits and perks (e.g., health insurance coverage, retirement contributions, stock options, or wellness program participation, among others), payroll deductions (e.g., federal, state, or local taxes, social security contributions, healthcare contributions (e.g., Medicare contributions), retirement plan contributions, among others), variable pay factors (e.g., performance-based bonuses, profit sharing distributions, or incentivized compensation, among others), or information on payroll frequency (e.g., monthly, biweekly, or weekly, among others), among others. Parameter data 124 can correspond to non-monetary items, such as leave entitlements, vacation days, sickness entitlements, annual, quarterly or monthly leaves, payment plans for parental leaves, forfeit or expiration of vacation days, data on buying or selling of leave balances (e.g., days of vacation), public holiday adjustments, overtime days or hours, compensation data, bonus data, retirement contribution data, data on stocks, bonds or shares associated with the electronic account 130 (e.g., employee shares of the company), or any other information or resource associated with the electronic account 130.

Parameter data 124 can include parameter values 126, which can include any values, amounts or sum indicative of an amount of any particular parameter type within a time interval 132. The time intervals 132 can include any time intervals for which the periodic resource process 116 is completed (e.g., a pay period), such as a period of a week, a bi-week (e.g., two weeks), a semi-month (e.g., 15 days), a month, a bi-month (e.g., two months), a quarter (e.g., 3 months), a semi-annual period (e.g., 6 months), a year or an annual period (e.g., 12 months) or more than a year. Parameter value 126 can include a value indicative of a magnitude of the parameter type, such as a value indicative of an amount of resources provided within a time interval 132 of a work week. For instance, parameter value 126 can include a value for a number of hours worked in a payroll week (e.g., 45 hours worked for a given work week). Parameter value 126 can include a value indicative of a number of resources accrued or spent over a time interval 132 (e.g., a number of vacation days accrued or spent), a number of billable hours implemented on a particular project type, a value for a number of units of resources provided or manufactured, or any other parameter indication that can be utilized for a resource process 116.

Accumulated values 128 can include any accumulation or sum of parameter values 126 accrued over a predetermined plurality of time intervals 132. For instance, accumulated value 128 can include a total sum of the parameter values 126 accumulated or accrued for a particular parameter 124 (e.g., work hours) over a period of a plurality of time intervals 132 (e.g., pay periods), such as a total number of work hours in a fiscal year. The accumulated value 128 can include any accumulated sum of parameter values 126 for any type of parameters, including for example, the accumulated number of work hours for a fiscal year or a quarter, accumulated number of vacation days for a fiscal year or two years, an accumulated amount of retirement investments for a number of years or any other accumulation of resources of any predetermined or set number of pay periods (e.g., time intervals 132).

Electronic account 130, also referred to as a client account 130, can include any digital interface, record or arrangement that represents data, actions, transactions or activities that corresponds to an entity, such as a client or a user. Electronic account 130 can be an account of an employee or user associated with an entity system 108, such as an employee of an entity (e.g., a corporation). Electronic account 130 can serve as a digital identity through which, or using which, various transactions and interactions can be processed on behalf of the account holder, such as the employee, a department or the entity itself. For instance, electronic account 130 can allow for automated resource processes 116 to process transactions such as leave entitlements (e.g., vacation days, personal time off, annual leaves, sickness entitlements or sick days, timesheets data, overtime data), compensation computations (e.g., salary, benefits, retirement contributions, overtime, stock or options computations) or any other payroll, human resources, and other administration related transactions and processes.

Electronic account 130 can include or store confidential data, such as confidential information of an individual employee, including a social security number, bank account information, salary details, and employment history. Electronic account 130 can include access credentials like usernames and passwords, which facilitate secure login to the company's internal systems. Electronic account 130 can include benefits enrollment information, performance review records, and time-off requests, resources accrual data (e.g., rate at which resources 114 are accrued or generated per month or per year), each of which can be integral to managing the employee's relationship with the entity through the system 100.

Entity data 136 can include any data or information on the entity system 108. Entity data 136 can include information on the entity (e.g., corporation or organization) associated with the entity system 108. Entity data 136 can include information identifying or corresponding to configurations 142 or protocols 134 associated with, or corresponding to, the entity system 108. The entity data 136 can include information about parameter types (e.g., parameter data 124) for the given entity system 108. The entity data 136 can be included in, or provided by, a data structure corresponding to an entity system 108 and including configurations 142, protocols 134 and rules associated with the entity system 108.

Configuration 142 can include any settings, or predefined parameters that dictate how parameter adjustment is to be performed for a given parameter. Configuration 142 can include a framework that guides or corresponds to protocols 134 or rules 144 for particular operations. For instance, a configuration 142 can specify the frequency of payroll runs (e.g., the time intervals 132), indicate the entity's cycle preference, types of parameters for which to implement the parameter adjustments, thresholds for various parameter types to trigger parameter adjustment process, specific protocols 134 to use for any parameter adjustment, as well as any rules 144 to utilize. Configuration 142 can include parameter values or rules to trigger parameter adjuster 140 to implement parameter adjustment for a particular parameter data 124. Configuration 142 can indicate a protocol 134 to utilize for the given parameter adjustment and any rules 144 to operate or implement generation or creation of component values 152. Configuration 142 can identify modifiers 162 for any component values 152 allowing for determination or generation of adjusted parameter values 164 according to predetermined protocol 134 or series of operations. For example, configuration 142 can establish specific deductions for health insurance that apply uniformly across all employee accounts, ensuring that these deductions are consistently applied during each payroll cycle. Configurations 142 can define eligibility criteria for overtime pay, allowing the system to automatically adjust calculations based on employee hours worked.

Protocol 134 can include any formalized process for implementing parameter adjustment for a given electronic account 130 or entity system 108. Protocol 134 can include rules 144 dictating how parameter values 126 are to be split into component values 152. Protocol 134 can indicate the number of component values 152 into which the parameter value 126 is to be split. Protocol 134 can indicate the modifiers 162 to apply to each of the component values, as well as how to combine the component value 152 with the modifier 162 (e.g., multiply the two) to generate the adjusted parameter value 164. Protocol 134 can define one or more rules 144 to operate for the parameter values splitter 150 to generate a predetermined or set number of component values 152 to replace or use instead of the parameter value 126 provided by the entity system 108 for a resource processing system 110. Protocol 134 can identify a predetermined number of modifiers 162 (e.g., multiplying factors) for each of the component values 152. Protocol 134 can include instructions to combine (e.g., multiple or add) the component values 152 with the modifiers 162 to produce one or more adjusted parameter values 164 to provide to the resource processing system 110 to use, instead of the original parameter value 126 provided by the entity system 108, for completing the resource process 116.

Rules 144 can include any specific criteria or conditions that dictate how parameter adjustments and resource (e.g., payroll) determinations (e.g., processing operations) are performed. Rules 144 can indicate specific rates to apply to different component values 152 corresponding to the parameter value 126 associated with the time interval 132. For instance, a rule 144 can indicate a first rate for a beginning portion of a range of parameter values 126 to apply up to a particular threshold value of accumulated hours (e.g., $18 per hour rate for up to 500 accumulated hours, or up to 40 hours per week). For instance, the same or a different rule 144 can indicate a second rate for an end portion of the range of parameter values 126 at, or above, the particular threshold value (e.g., $20 per hour rate for hour 500 and above, or $36 hour rate for any hour over 40 hours per week).

Rules 144 can include instructions or constraints for controlling the process of the parameter adjustment based on the protocol 134. Rule 144 can be configured to maintain compliance with organizational policies and regulatory requirements for given parameter value processes (e.g., hourly payments for overtime or double time per state rules or regulations). For instance, a rule 144 can specify that overtime pay is to be calculated at a rate of one and a half times the standard hourly wage for hours worked beyond forty in a week. For example, a rule 144 can include rules, contractual clauses or regulations governing leave entitlements, which would determine how vacation days are accrued based on an employee's tenure with the organization. For example, a rule 144 can establish conditions under which bonuses are awarded based on performance metrics or departmental budgets.

Parameter adjuster 140 can include any combination of hardware and software for performing parameter adjustment for resource processing. Parameter adjuster 140 can include functionality for generating adjusted parameter values 164 to use for resource processes 116 at a resource processing system 110. The parameter adjuster 140 can be configured for identifying when adjustments are to be applied based on changes detected in parameter values 126 during specified time intervals 132 (e.g., pay periods). For example, if an hourly rate of an employee associated with an electronic account 130 increases within a time interval 132 (e.g., a pay period), the parameter adjuster 140 can utilize the protocols 134 and rules 144 associated with configuration 142 of the given entity system 108 to dynamically recalibrate the associated compensation parameters. For instance, the parameter adjuster 140 can utilize, based on the rules 144 of a protocol 134 associated with the electronic account 130 of an entity system 108, parameter value splitter 150 and the modifier assigner 160 to generate component values 152 and their associated modifiers 162 to generate adjusted parameter values 164.

Parameter adjuster 140 can be configured to detect or receive a parameter value 126 from an entity system 108. For example, an entity system 108 can send a request or an instruction to commence processing of transactions associated with resource processes 116 at the resource processing system 110. The request or instruction from the entity system 108 can include a parameter value 126 associated with an electronic account 130 of a client (e.g., entity employee) to use for a resource process to be executed for a time interval 132 (e.g., pay period) of a plurality of pay periods (e.g., predetermined time intervals for timely and regular processing of payroll). Parameter adjuster 140 can determine, based on configuration 142 for the relevant entity, whether a parameter adjustment should be performed according to protocol 134 and rules 144. Protocol 134 can utilize settings 112 that identify a first rate for a first range of parameter values and a second rate for a second range, with a threshold value used to select between these rates based on accumulated parameter value 128 over multiple intervals.

The parameter adjuster 140 can intercept the request intended for the resource processing system 110 and determine, based on a configuration 142 for an entity system 108 associated with the electronic account 130 (e.g., the client account), to perform parameter adjustment according to a protocol 134 of the configuration 142. Parameter adjustment can include adjusting parameter values 126 using parameter value splitter 150 or modifier assigner 160 and providing the adjusted parameter value 164 to the resource processing system 110 to use instead of the parameter value 126 provided by the entity system 108. For example, the parameter adjuster 140 can use the parameter value 126 for a parameter (e.g., number of hours for a payroll period to be processed) or an accumulated value 128 for the same parameter (e.g., the number of hours collected for the fiscal year) along with a configuration 142 stating to perform parameter adjustment when a particular threshold for either parameter value 126 or accumulated value 128 is satisfied. In response to the thresholds set up in the configuration 142 (e.g., for parameter value 126 or accumulated value 128), the parameter adjuster 140 can determine that a parameter adjustment is to be performed. In response to such a determination, the parameter adjuster 140 can activate or utilize parameter value splitter 150 and modifier assigner 160.

Parameter adjuster 140 can identify and retrieve one or more rules 144 to use for parameter adjustment. The one or more rules 144 can be identified or selected based on a protocol 134 of the configuration 142. The one or more rules 144 can include directions, instructions, parameters or settings for various steps or parts of the process to implement the parameter adjustment for the electronic account 130. The protocol 134 and the one or more rules 144 can identify or provide settings, guidelines or ranges for component values 152 or modifiers. The protocol 134 and the one or more rules 144 can provide guidelines to generate adjusted parameter value 164.

Component values 152 can include any individual values derived or created based on parameter value 126 for a parameter data type. Component values 152 can include values derived from split or divided or apportioned parameter values to facilitate adjustments of parameters during resource processing. Component values 152 can correspond to discrete elements or portions of parameters (e.g., resources, assets or value) that can be processed for compensation or entitlements based on specific rules 144 or protocols 134. For example, component values 152 can include a plurality of values whose sum corresponds to a parameter value 126 of hours. Each component value 152 can correspond to a separate or individual group of such hours. For instance, a first component value 152 can correspond to an amount of regular hours worked at a first hourly rate before a changed (e.g., a second) hourly rate was applied during the time interval 132. A second component value 152 can correspond to a second hourly rate for a second portion of the time interval 132 after the changed hourly rate was applied. A third component value 152 can correspond to the amount of overtime hours for the time interval 132 (e.g., pay period). A fourth component value 152 can correspond to double hours for the time interval 132 (e.g., the pay period). These component values 152 can be utilized along with their respective modifiers 162 to adjust or modify the hours for each individual component value 152. Depending on the type of parameter (e.g., resource or asset utilized), the component values can capture deductions such as taxes or retirement contributions that can be handled by their own respective resource processes 116.

Parameter value splitter 150 can include any mechanism or functionality for generating component values 152 based on parameter values 126. Parameter value splitter 150 can be configured to divide or split received parameter values 126 into smaller values for more granular processing. This splitting can allow more precise adjustments based on varying conditions or requirements within a single time interval 132 (e.g., a single payroll cycle). For instance, a parameter value splitter 150 can divide the received parameter value 126 into a plurality of component values 152, using the applicable setting and threshold from configuration 142 and protocol 134. This can allow for more granular adjustment of resource computations in response to intra-periodic changes (e.g., changes to parameter value rates within a time interval). For instance, if an employee's total compensation includes base salary and bonuses, the parameter value splitter 150 can separate these amounts to apply different modifiers 162 (e.g., rate adjustments) for each one of the two component values 152. Parameter value splitter 150 can split a parameter value 126 into a plurality of component values 152 whose sum is equal to the original parameter value 126. For instance, a parameter value 126 of 54 work hours can be split into component values 152 of 40 for regular hours and 12 hours of overtime. The modifier 162 for overtime can be a multiplier at a rate of 1.5 (e.g., to make the hourly rate 1.5 of regular hourly rate for each hour over 40) or can be 2, 2.5, 4, 5 or any other amount, depending on a regulation for a geographical area (e.g., a state) or a contractual agreement for which such an arrangement applies. For example, parameter value splitter 150 can break down an accumulated leave balance into distinct categories such as sick leave and vacation days, allowing for tailored management of each resource type. For example, parameter value splitter 150 can facilitate adjustments based on different employment contracts that require unique handling of compensation elements.

The parameter adjuster 140 can utilize the parameter value splitter 150 to split the parameter value 126 received from the entity system 108 into a plurality component values 152. The component values 152 can include a plurality of values whose sum corresponds to, to equals to, the parameter value (e.g., the number of hours worked by an employee during a pay period to be processed). The parameter value splitter 150 can split the parameter value 126 into the component values 152 using the one or more rules 144 and based on an accumulated parameter value 128. For instance, the accumulated parameter value 128 for a pay period of hours to reach before overtime rate applies can be exceeded by the parameter value 126 for the hours in the pay period. Based on the accumulated parameter value 128 being reached or exceeded, a rule 144 can be configured to trigger the parameter value splitter 150 to split the parameter value 126 into a set or predetermined number of component values 152 to be used for generating the adjusted parameter value 164.

Modifiers 162 can include any rates, values, factors or variables for adjusting or combining with component values 152. A modifier 162 can include any value or a rate to use to adjust or multiply a component value to generate an adjusted parameter value 164 for a resource process 116. Modifiers 162 can be used to determine final compensation amounts based on rules 144 defining criteria. For instance, a modifier 162 can increase an employee's base salary by a certain percentage as part of an annual review process, per rule 144 defining such a change. For example, a modifier 162 can apply a deduction for a health insurance premium directly from an employee's paycheck, based on their selected plan. Modifiers 162 can be defined or managed by rules 144 that can indicate ranking of modifiers 162 to determine the order of operations or combinations of modifiers 162 with various component values 152.

Modifier assigners 160 can include any combination of hardware and software for applying modifiers 162 to individual component values 152. Modifier assigners 160 can include tools or algorithms for applying modifiers 162 assigned to individual component values 152 to those component values 152 during parameter adjustment portion of the resource processing. Modifier assigners 160 can assign, according to a ranking associated with a plurality of modifiers 162, one or more modifiers to the component values 152. These modifiers can be associated with at least one of the applicable rates and can be selected to optimize resource allocation for the client account 130. Modifier assigner 160 can check that adjustments reflect accurate modifiers 162 (e.g., rates) or conditions as dictated by organizational policies or regulations. For example, a modifier assigner 160 can apply a higher rate for holiday pay compared to regular pay when calculating an employee's paycheck. For example, a modifier assigner can apply a first rate for a first portion of pay period and a second rate to a second portion of the same pay period, based on a parameter value 126 being adjusted in a contractual agreement indicated by a protocol 134 or a rule 144. For example, modifier assigner 160 can assign modifiers to the given component values 152 based on specific rules 144 indicating which component value 152 corresponds to which modifier 162.

The modifier assigner 160 can be configured to assign or apply one or more modifiers 162 of the plurality of modifiers 162 (e.g., that may be identified by the one or more rules 144 for the protocol 134 used for parameter adjustment) to one or more component values 152 of the plurality of component values. For example, the modifier assigner 160 can assign or apply one or more modifiers 162 to one or more component values 152 according to the one or more rules 144 for ranking a plurality of modifiers 162. The one or more rules 144 can rank the modifiers 162 based on settings or ordering sequence determined based on contractual agreement, regulations, laws or guidelines of the entity.

Adjusted parameter values 164 can include any value or figure that is determined based on modifiers 162 and component values 152. For instance, using the adjusted component values 152 and assigned modifiers 162, the system can generate one or more adjusted parameter values 164 for the relevant time interval 132. Adjusted parameter values 164 can include recalibrated figures resulting from applying modifiers 162 to component values 152 per rules 144 of a protocol 134 defined or identified by a configuration 142 of a particular entity system 108. Adjusted parameter values 164 can represent the final amounts used to replace parameter values 126 to provide to resource processing system 110 for resource processing. For example, adjusted parameter values 164 can reflect an employee's total earnings after accounting for overtime and bonuses earned during a specified period. For instance, adjusted parameter values 164 can include adjusted number of hours to be used with a preset resource processing system to cause a compensation or salary payment according to a contract associated with the electronic account 130. For example, adjusted parameter values 164 can incorporate tax withholdings and other deductions for compliance with financial regulations, based on rules 144. For instance, the parameter adjuster 140 can generate one or more adjusted parameter values 164 for the time interval 132 using the one or more component values 152 adjusted using the one or more modifiers 162.

Command 168 can include any instruction generated by the command generator 166 to facilitate the execution of a resource process 116 based on an adjusted parameter value 164. Command 168 can include actionable directives that initiate resource process 116 and instructing the resource processing system 116 to utilize the adjusted parameter value 164 to complete the resource process 116. For example, a command 168 can instruct the resource processing system 110 to execute direct deposit payment to an employee associated with an electronic account 130, based on the earnings calculated using the adjusted parameter value 164. For example, a command 168 can instruct the resource processing system 110 to execute retirement investment fund operation associated with an electronic account 130, based on the earnings calculated using the adjusted parameter value 164. For example, a command 168 can instruct the system to update employee leave balances in the system after processing time-off requests, checking that records are accurate and reflect current entitlements.

Command generator 166 can include any combination of hardware and software for generating commands 168. Command generator 166 can issue commands 168 to resource processing system 110, directing it to execute resource processes 116 that calculate the amount of resources 114 to be applied to the client account 130 for the specified interval. Command generator 166 can include an automated system for issuing commands 168 based on, including or referencing, adjusted parameter values 164 with an instruction for the payroll processing system to execute a resource process 116. Command generator 166 can generate commands 168 to indicate to the resource processing system 116 that the resource parameter 126 is modified or adjusted and provide the adjusted parameter value 164 instead. The command generator 166 can provide the command 168 that resembles the command of the entity system 108 and presents the adjusted parameter value 164 as the original parameter value 126 of the entity system 108. The command generator 166 can issue a command 168 to the resource processing system 110 to execute a resource process 116 for the client account 130 and the time interval 132 based on the one or more adjusted parameter values 164.

Upon receiving the resulting amounts from the resource processing system 110, the data processing system 120, the parameter adjuster 140 or the interface 170 can store the value results into the data repository 122. For instance, the resulting resource amounts for each time interval 132 can be stored in data repository 122, such that each output result from the resource processing system 110 is recorded in a memory location associated with the electronic account 130, which can then be used as a comprehensive and auditable record of all adjustments and resource determinations over time. In summary, system 100 can receive parameter values 126 from entity system 108, determine adjustments based on configuration 142 and protocol 134, split parameter values into component values 152, assign modifiers 162 according to ranking, generate adjusted parameter values 164, command resource processing system 110 to apply resources 114, and store the resulting resource amounts in data repository 122 associated with client account 130.

Interface 170 can interface for communicating with one or more resource processing systems 110, entity system 108 or client devices 102. Interface 170 can include any user-facing components designed to facilitate interaction between users on client devices 102 and the resource processing system 110. Interface 170 can provide functionalities for inputting data and displaying outputs related to payroll processes. For instance, the interface 170 can allow a human resources personnel to enter time entries and view corresponding pay calculations in real-time. The interface 170 can allow receiving of user entries that were provided from the client device 102 via user interface 104, providing responsive information, including processed data for display at the client device 102.

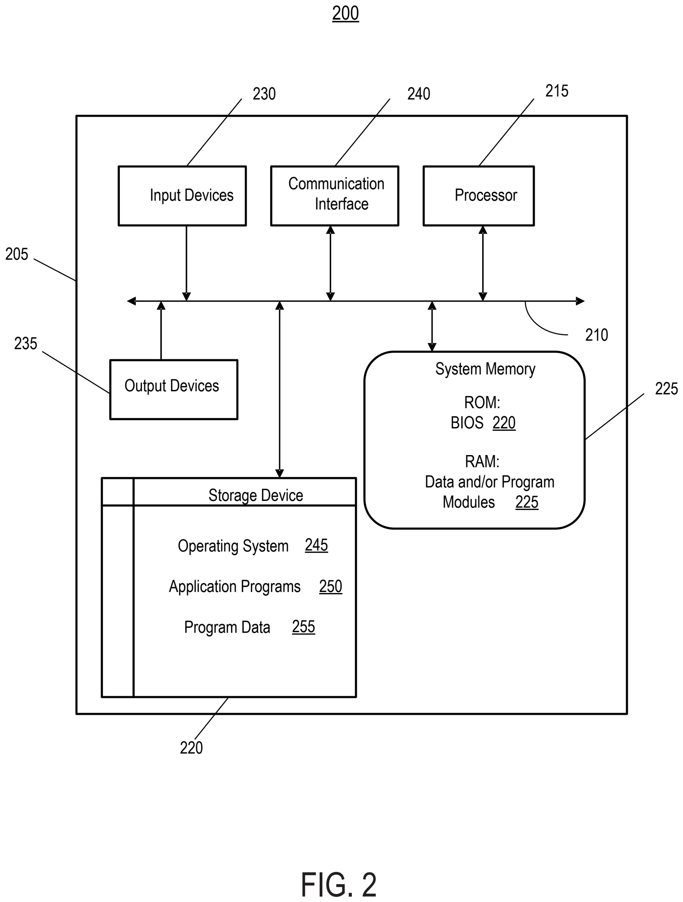

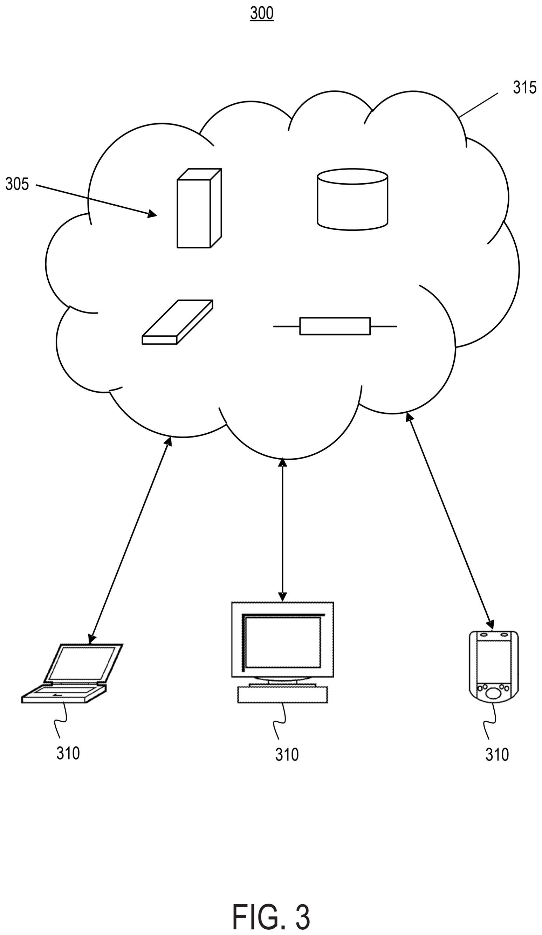

As shown in FIG. 2, computing system 200 includes a computing device 205. The computing device 205 can be resident on a network infrastructure such as within a cloud environment, as shown in FIG. 3, or can be a separate independent computing device (e.g., a computing device of a third-party service provider). The computing device 205 can include a bus 210, a processor 215, a storage device 220, a system memory (hardware device) 225, one or more input devices 230, one or more output devices 235, and a communication interface 240. One or more component of the computing system 200 can be part of or form the data processing system 120.

The bus 210 permits communication among the components of computing device 205. For example, bus 210 can be any of several types of bus structures including a memory bus or memory controller, a peripheral bus, and a local bus using any of a variety of bus architectures to provide one or more wired or wireless communication links or paths for transferring data and/or power to, from, or between various other components of computing device 205.

The processor 215 can be one or more processors or microprocessors that include any processing circuitry operative to interpret and execute computer readable program instructions, such as program instructions for controlling the operation and performance of one or more of the various other components of computing device 205. In embodiments, processor 215 interprets and executes the processes, steps, functions, and/or operations of the technical solutions described herein, which can be operatively implemented by the computer readable program instructions.

For example, processor 215 provides an enterprise-wide security approach with all stakeholders (e.g., Dev teams, leadership, CSO office, etc.) with a set of various anomaly detection and transaction (e.g., payroll processing) integrity functionalities into single tool. In embodiments, the processor 215 uniformly integrates or packages existing functions for anomaly detection (e.g., using AI or other features) into a transaction integrity tool that standardizes and visually displays the output over different development teams for any purposes of anomaly detection or transaction integrity. The integrated security tool can capture specific requirements of the different teams, i.e., ensures that the tools support varied team development methodologies and different tech stacks to capture security vulnerabilities. The processor 215 also establishes a regular feedback mechanism and can be used to develop a process for remediation timelines and priority including at risk vulnerabilities.

In embodiments, processor 215 can receive input signals from one or more input devices 230 and/or drive output signals through one or more output devices 235. The input devices 230 can be, for example, a keyboard, touch sensitive user interface (UI), etc., as is known to those of skill in the art such that no further description is required for a complete understanding of the technical solutions described herein. The output devices 235 can be, for example, any display device, printer, etc., as is known to those of skill in the art such that no further description is required for a complete understanding of the technical solutions described herein.

The storage device 220 can include removable/non-removable, volatile/non-volatile computer readable media, such as, but not limited to, non-transitory media such as magnetic and/or optical recording media and their corresponding drives. The drives and their associated computer readable media provide for storage of computer readable program instructions, data structures, program modules and other data for operation of computing device 205 in accordance with the different aspects of the technical solutions described herein. In embodiments, storage device 220 can store operating system 245, application programs 250, and program data 255 in accordance with aspects of the technical solutions described herein.

The system memory 225 can include one or more storage mediums, including for example, non-transitory media such as flash memory, permanent memory such as read-only memory ("ROM"), semi-permanent memory such as random-access memory ("RAM"), any other suitable type of storage component, or any combination thereof. In some embodiments, an input/output system (BIOS) including the basic routines that help to transfer information between the various other components of computing device 205, such as during start-up, can be stored in the ROM. Additionally, data and/or program modules 225, such as at least a portion of operating system 245, application programs 250, and/or program data 255, that are accessible to and/or presently being operated on by processor 215 can be contained in the RAM.

The communication interface 240 can include any transceiver-like mechanism (e.g., a network interface, a network adapter, a modem, or combinations thereof) that allows the computing device 205 to communicate with remote devices or systems, such as a mobile device or other computing devices such as, for example, a server in a networked environment, e.g., cloud environment. For example, computing device 205 can be connected to remote devices or systems via one or more local area networks (LAN) and/or one or more wide area networks (WAN) using communication interface 240.

As discussed herein, computing system 200 can be configured to integrate different anomaly detection and transaction integrity features into a single workbench or tool. This allows developers and other team members a uniform approach to assessing security vulnerabilities throughout the enterprise. In particular, computing device 205 can perform tasks (e.g., process, steps, methods and/or functionality) in response to processor 215 executing program instructions contained in a computer readable medium, such as system memory 225. The program instructions can be read into system memory 225 from another computer readable medium, such as data storage device 220, or from another device via the communication interface 240 or server within or outside of a cloud environment. In embodiments, an operator can interact with computing device 205 via the one or more input devices 230 and/or the one or more output devices 235 to facilitate performance of the tasks and/or realize the end results of such tasks in accordance with aspects of the technical solutions described herein. In additional or alternative embodiments, hardwired circuitry can be used in place of or in combination with the program instructions to implement the tasks, e.g., steps, methods and/or functionality, consistent with the different aspects of the technical solutions described herein. Thus, the steps, methods and/or functionality described herein can be implemented in any combination of hardware circuitry and software.

FIG. 3 shows an exemplary cloud computing environment 300 in accordance with aspects of the technical solutions described herein. In embodiments, one or more aspects, functions and/or processes described herein can be performed and/or provided via cloud computing environment 300. As depicted in FIG. 3, cloud computing environment 300 includes cloud resources 305 that are made available to client devices 310 via a network 315, such as the Internet. Cloud resources 305 can be deployed or provided on a single network or a distributed network. Cloud resources 305 can be distributed across multiple cloud computing systems and/or individual network enabled computing devices. Cloud resources 305 can include a variety of hardware and/or software computing resources, such as servers, databases, storage, networks, applications, and platforms that perform the functions provided herein including storing code, anomaly detection and transaction integrity features or functionalities into a uniform and standardized application, e.g., display.

Client devices 310 can comprise any suitable type of network-enabled computing device, such as servers, desktop computers, laptop computers, handheld computers (e.g., smartphones, tablet computers), set top boxes, and network-enabled hard drives. Cloud resources 305 are typically provided and maintained by a service provider so that a client does not need to maintain resources on a local client device 310. In embodiments, cloud resources 305 can include one or more computing system 200 of FIG. 2 that is specifically adapted to perform one or more of the functions and/or processes described herein.

Cloud computing environment 300 can be configured such that cloud resources 305 provide computing resources to client devices 310 through a variety of service models, such as Software as a Service (SaaS), Platforms as a service (PaaS), Infrastructure as a Service (IaaS), and/or any other cloud service models. Cloud resources 305 can be configured, in some cases, to provide multiple service models to a client device 310. For example, cloud resources 305 can provide both SaaS and IaaS to a client device 310. Cloud resources 305 can be configured, in some cases, to provide different service models to different client devices 310. For example, cloud resources 305 can provide SaaS to a first client device 310 and PaaS to a second client device 310.

Cloud computing environment 300 can be configured such that cloud resources 305 provide computing resources to client devices 310 through a variety of deployment models, such as public, private, community, hybrid, and/or any other cloud deployment model. Cloud resources 305 can be configured, in some cases, to support multiple deployment models. For example, cloud resources 305 can provide one set of computing resources through a public deployment model and another set of computing resources through a private deployment model.

In embodiments, software and/or hardware that performs one or more of the aspects, functions and/or processes described herein can be accessed and/or utilized by a client (e.g., an enterprise or an end user) as one or more of a SaaS, PaaS and IaaS model in one or more of a private, community, public, and hybrid cloud. Moreover, although aspects of the technical solutions described herein include a description of cloud computing, the systems and methods described herein are not limited to cloud computing and instead can be implemented on any suitable computing environment.

Cloud resources 305 can be configured to provide a variety of functionality that involves user interaction. Accordingly, a user interface (UI) can be provided for communicating with cloud resources 305 and/or performing tasks associated with cloud resources 305. The UI can be accessed via a client device 310 in communication with cloud resources 305. The UI can be configured to operate in a variety of client modes, including a fat client mode, a thin client mode, or a hybrid client mode, depending on the storage and processing capabilities of cloud resources 305 and/or client device 310. Therefore, a UI can be implemented as a standalone application operating at the client device in some embodiments. In other embodiments, a web browser-based portal can be used to provide the UI. Any other configuration to access cloud resources 305 can also be used in various implementations.

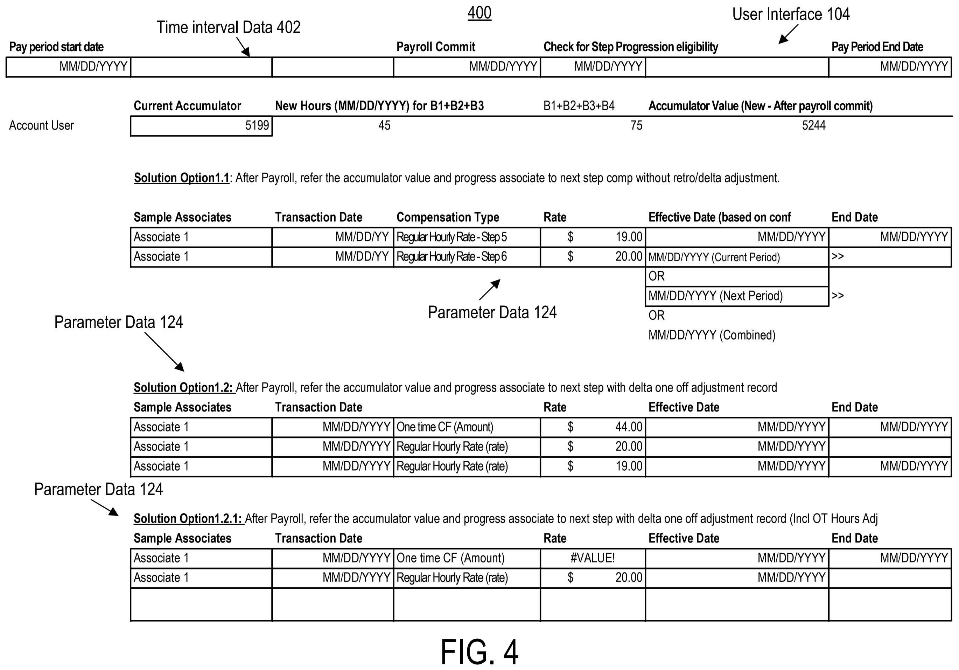

FIG. 4 illustrates an example 400 of a window that can be displayed in a user interface 104. The example 400 window can include or identify time interval data 402, including any data specifying time interval 132. The time interval data 402 can include starting and ending days of pay periods (e.g., time interval 132) for which processing is intended. Example 400 of a window can include parameter data 124, including any parameter values 126 or accumulated values 128. The parameter data 124 can identify or list hourly rates for various transaction dates or effective dates.

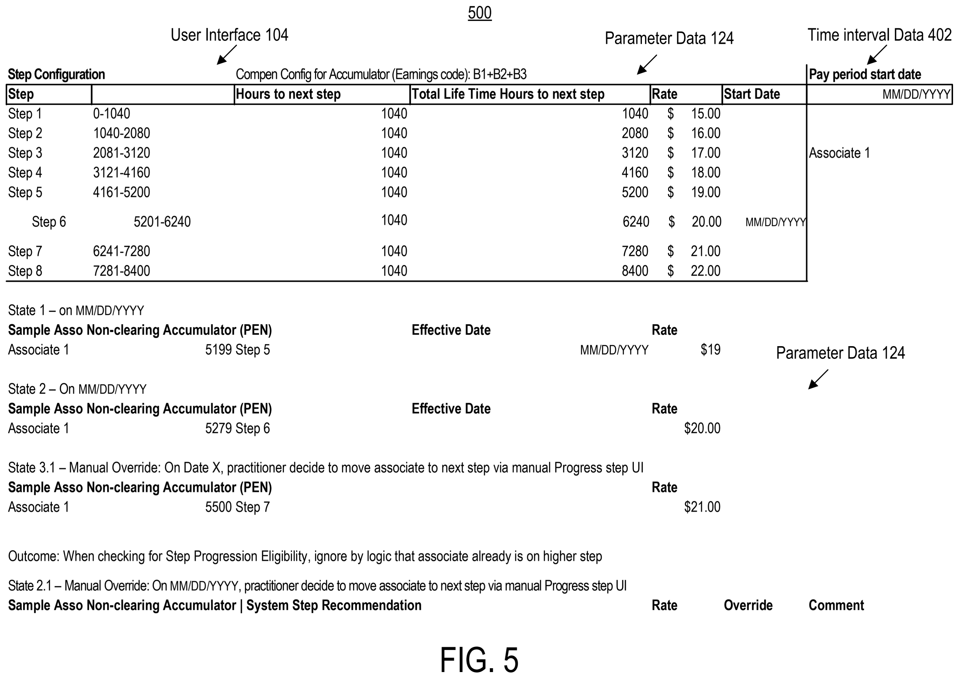

FIG. 5 illustrates an example 500 of a window that that can be displayed in a user interface 104, listing various parameter data 124 for different operations or transactions. The example 500 window can include time interval data 402 indicating information on time intervals 132 (e.g., starting and ending dates), as well as any parameter data 124 for those time periods.

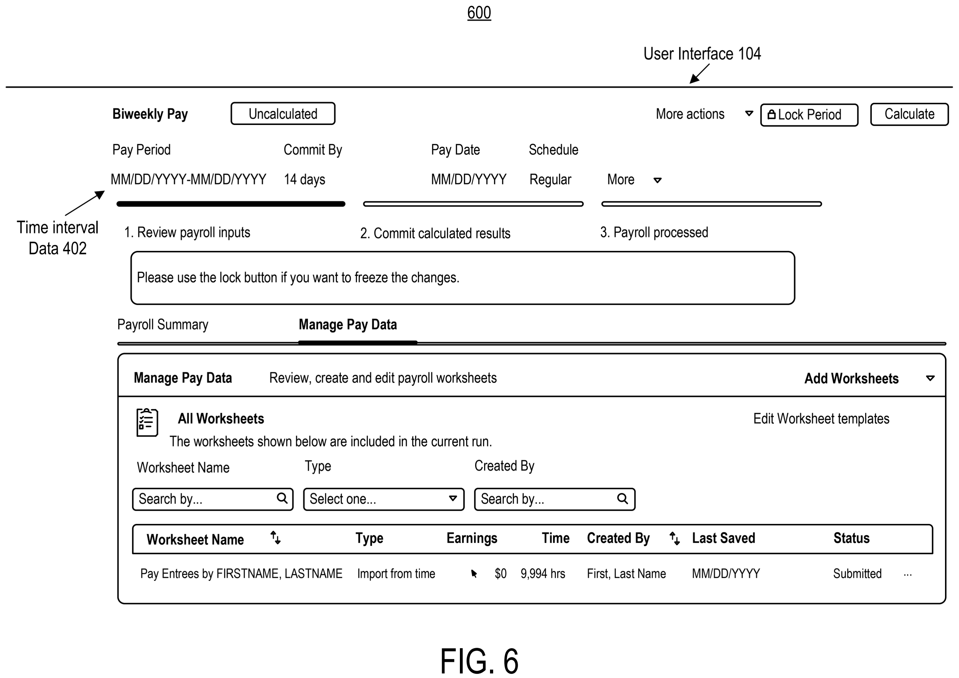

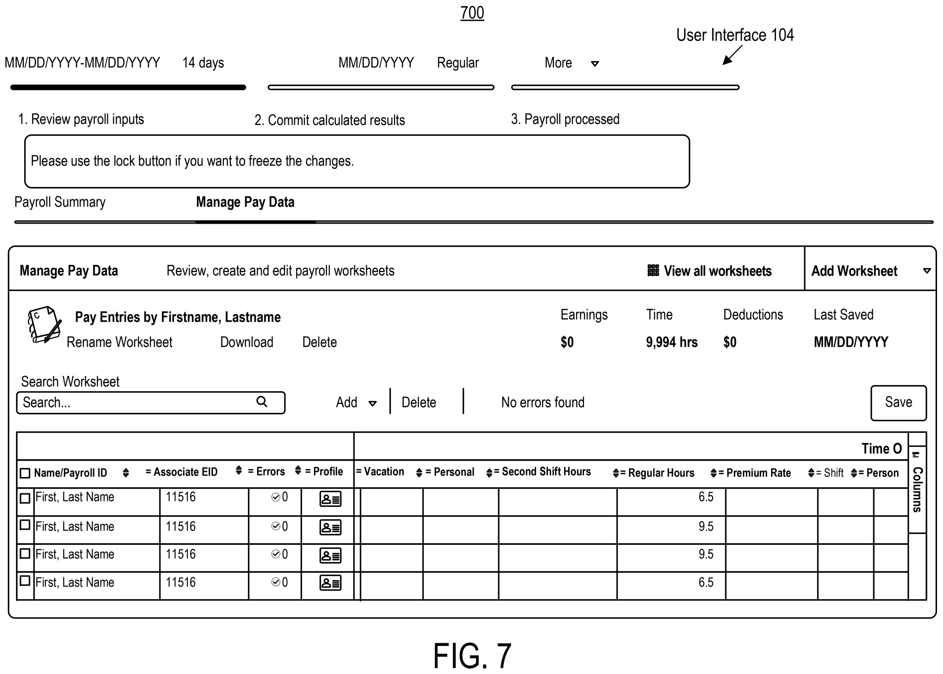

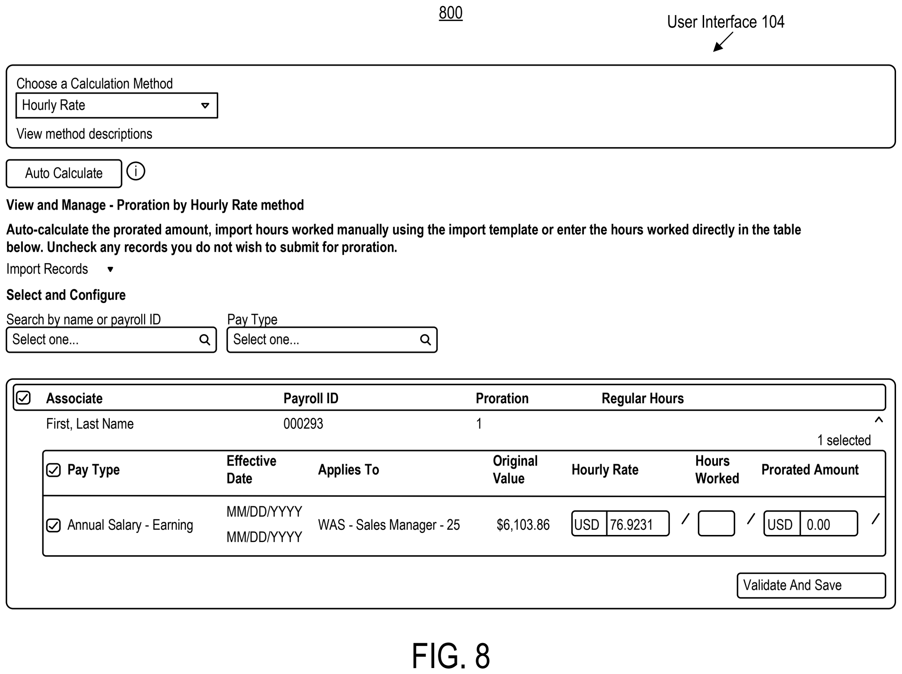

FIGs. 6-8 illustrate examples of a user interface 104 that can be displayed on a client device to facilitate user selections or inputs. For example, in FIG. 6 an example 600 of a user interface 104 output can include a window that can be displayed to a user on a client device, listing buttons and options for user selections and inputs, such as selections and inputs with respect to time interval data 402, parameter data 124 or any other settings or information. For example, FIG. 7 presents an example 700 of a user interface 104 output that can provide time interval data 402, parameter data 124, component values 152 or modifiers 162 for selection, changes or inputs by the user. For example, FIG. 8 presents an example 800 of a user interface 104 window that can provide time interval data 402, parameter data 124, component values 152 or modifiers 162 for selection, changes or inputs by the user.

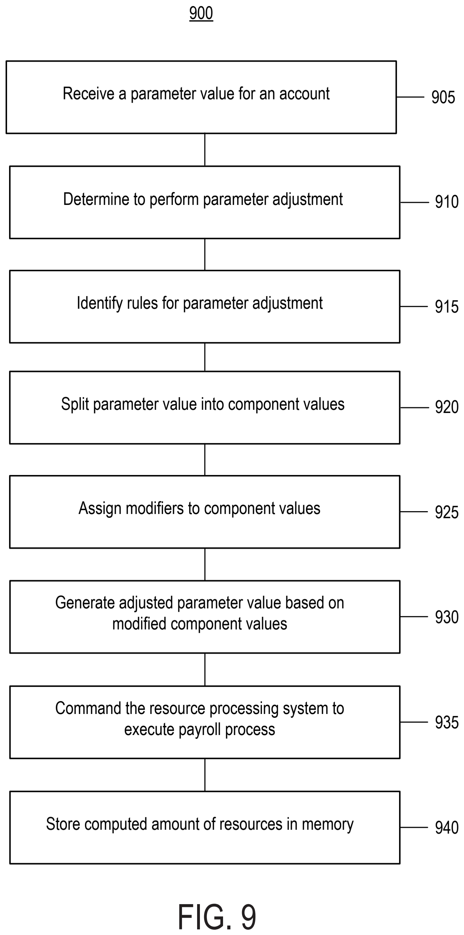

FIG. 9 depicts a method 900 for providing intersystem configuration adjustment for periodic operation processing. The method 900 can be performed using one or more systems, features, acts or components depicted or discussed in connection with any of the figures described herein. For instance, method 900 can be implemented, for example, using a data processing system 120 of FIG. 1 implemented on a computing system 200 of FIG. 2 or on a cloud computing environment 300 of FIG. 3. For instance, the method 900 can be implemented by one or more processors 215 executing operations based on instructions and data stored in a system memory 225, where the instructions can cause the one or more processors 215 to implement any functionality of the data processing system 120. The method 900 can include any acts be implemented in any order sequence or combination with potentially additional acts, some of which can overlap in time, and one or more of which can be omitted in various contemplated implementations.

The method 900 can include acts or operations 905-940. At 905, a parameter value for an account can be received. At 910, a determination can be made to perform parameter adjustment. At 915, rules for parameter adjustment can be identified. At 920, parameter value can be split into component values. At 925, modifiers can be assigned to component values. At 930, adjusted parameter values can be generated based on modified component values. At 935, resource processing system can be commanded to execute a resource process using adjusted component value. At 940, computed amount of resources can be stored in memory.

At 905, a parameter value for an account can be received. The method can include one or more processors coupled with memory receiving a value for a parameter (e.g., a parameter value) of a client account. The parameter value can be associated with a resource processing system or a particular resource process. For instance, a parameter can be a parameter used as an input into a particular resource process at a resource processing system. The one or more processors can receive the value for the parameter from an entity system (e.g., via a network). For example, a parameter adjuster can detect, receive or intercept a transmission, a message or a request from the entity system to process resource on behalf of a client account (e.g., an electronic account associated with an employee of an entity, such as a corporation or organization). The message can include or indicate a parameter value or identify an electronic account that is associated with an entity system or a resource process. The parameter adjuster can detect or intercept the message or request for performing a particular type of resource process. The method can include the parameter adjuster identifying, for the client account, a plurality of values comprising the value for a plurality of parameters comprising the parameter.

Resource processes can include a variety of operations that an entity system or data processing system may request to perform on parameter values. The resource processes can encompass calculating employee salaries based on hours worked, including adjustments for overtime, bonuses, and commissions. The resource processes can process operations with respect to deductions for taxes, retirement contributions, and benefits such as health insurance or flexible spending accounts. The resource processes can include processing leave entitlements by calculating accrued vacation and sick days, processing requests for time off, and updating leave balances accordingly. The resource processes can facilitate the generation of pay stubs and reports that summarize earnings and deductions for employees. The resource processes can process operations to validate or implement compliance with labor laws by ensuring accurate calculations of minimum wage, overtime pay, and other regulatory requirements. The resource processes can include the automation of direct deposit transactions to employee bank accounts and the management of resource-related inquiries from employees regarding their compensation and benefits.

The method can include by one or more processors coupled with memory implementing the parameter adjuster that receives, from an entity system, a value for a parameter of a client account associated with a resource processing system. The value for the parameter (e.g., parameter value) can include a number of hours worked for the entity within the time interval corresponding to a pay cycle. The parameter value can include an accumulated parameter value corresponding to a sum of hours worked for the entity within the plurality of time intervals corresponding to a fiscal year. The parameter values can include metrics and data points used for resource processing operations, such as hourly rates, salaries, and accumulated leave balances. The parameter values can include the total hours worked by an employee during a specified time interval, which can impact their earnings for that period. The parameter value can include accrued hours, accrued vacation days or accrued sick leave balances associated with an employee's electronic account for the fiscal year (e.g., accumulated parameter values). The parameter values can include values for deductions such as tax withholding amounts or retirement contributions that are factored into the resource operations.

At 910, a determination can be made to perform parameter adjustment. The method can include a data processing system determining to perform parameter adjustment according to a protocol of the configuration. The method can make this determination based on a configuration for an entity associated with the client account. The protocol can be configured with one or more rules to utilize a setting identifying a first rate for a first range of values of the parameter and a second rate for a second range of values of the parameter. The protocol can be configured with one or more rules to utilize a threshold value for the parameter to select between the first rate and the second rate based on an accumulated value of the parameter over the plurality of time intervals.

The method can include the one or more processors determining to perform parameter adjustment. The one or more processors can determine to perform parameter adjustment based on a configuration for an entity associated with the client account. The one or more processors can determine to perform the parameter adjustment according to a protocol of the configuration associated with the entity system. For instance, the parameter adjuster can determine, based on the one or more parameter values associated with the electronic account or received via the intercepted or detected request or message to process resource, to perform parameter adjustment according to a protocol and the configuration associated with the electronic account (e.g., client account).

The method can include the parameter adjuster determining, based on the plurality of values for a plurality of parameters (e.g., parameter values) and the one or more rules associated with the configuration of the entity, to perform parameter adjustment. For instance, the parameter adjuster can determine, based on the plurality of parameter values associated with a request destined for the resource processing system, to perform parameter adjustment using the parameter value splitter and modifier assigner to generate the adjusted parameter value. The parameter adjustment can include using the one or more rules to modify one or more component values of the plurality of component values. A sum of the plurality of component values can be equal to the value for the parameter received from the entity system.

At 915, rules for parameter adjustment can be identified. The method can include the one or more processors identifying one or more rules for parameter adjustment. The one or more rules can be associated with, defined by, or identified or selected based on any one of the protocol associated with the configuration, the entity system or the electronic account. The one or more rules can include any specific criteria or conditions identifying the steps or actions to take to perform parameter adjustments for resource processing. The one or more rules can include or define rates for a particular range of resources (e.g., hours) to be computed (e.g., by multiplying the given designated rate for the resources within the given designated range defined by the rule). The one or more rules can define a specification that a class of resources (e.g., overtime hours) are to be paid or computed at a rate of one and a half times of a given rate (e.g., the standard hourly wage for hours) for any hour worked beyond forty hours in a week. For example, the one or more rules can establish actions to take on determining accrual of vacation days, based on an employee's length of service. The one or more rules can identify or establish how parameter value splitter can split component values based on parameter data (e.g., received from the entity system or identified in the account). The one or more rules can identify or establish how one or more modifiers are to be applied to one or more component values, based on the parameter data (e.g., received from the entity system or identified in the account). The one or more rules can identify or establish the ranking between different component values or modifiers, based on the parameter data. The system can support multiple protocols and settings for parameter adjustment, such as different compensation rates, step progression plans, and projection methodologies, and can dynamically select the appropriate configuration based on account status, accumulated values, or practitioner input.

The one or more processors can receive a regulation corresponding to a geographical area, such as a regulation associated with an electronic account. The one or more processors can detect that the client account corresponds to the geographical area. The one or more processors can update the one or more rules corresponding to the protocol, and responsive to the detection. For example, the parameter adjuster can generate or update the one or more rules to conform to the regulation, updating the component values or modifiers (e.g., rates by which to multiply component values). The method can further include automatically detecting the geographical region, jurisdiction or contractual context associated with a user or client electronic account and using the detected geographical area to update the applicable rules and protocols to ensure compliance with local laws, regulations, contracts, or other entity-specific or region specific settings or preferences.

At 920, parameter value can be split into component values. The method can include the one or more processors splitting the value for the parameter (e.g., parameter value) into a plurality of component values. The splitting can be performed or implemented using the setting and the threshold value, and based on the accumulated parameter value of the client account for the plurality of time intervals. For example, if the accumulated parameter value for an employee's account crosses a defined threshold during a pay period, the system can split the total hours worked into separate component values corresponding to the hours before and after the threshold. This can allow the system to apply different compensation rates or modifiers to each portion, facilitating accurate resource allocation in accordance with the applicable configuration and the given protocol. Each of the component values can include values smaller than the parameter value. The sum of the component values can be equal to the sum of the parameter value. The one or more processors can split the parameter value using the one or more rules. For instance, parameter value splitter can split the parameter value The one or more processors can split the parameter value based on an accumulated parameter value of the client account for the plurality of time intervals.

The method can include the one or more processors providing for display, to a user interface at a client device, the plurality of component values. The user interface at the client device can receive an input corresponding to at least a component value of the plurality of component values. The inputs can include mouse clicks, user inputs or otherwise selections of component values or instructions for modifying the component values. The one or more processors (e.g., the parameter adjuster 140) can modify at least the component value based on the input.

At 925, modifiers can be assigned to component values. The method can include the one or more processors assigning, according to the one or more rules for ranking a plurality of modifiers, one or more modifiers of the plurality of modifiers to one or more component values of the plurality of component values. The one or more modifiers can be associated with at least one of the first rate or the second rate that were provided or defined by one or more rules of the protocol associated with the electronic account associated with the parameter value. For instance, the component values determined by the parameter value splitter can be aligned with their respective modifiers, based on the one or more rules for the modifiers. The one or more rules can rank the modifiers according to the regulation, contractual terms or according to the maximum outcome for the electronic account. The modifiers can correspond to a particular rate, such as a first rate or a second rate for given range of parameter values. For example, when there are multiple options to combine the modifiers with the component values, a rule can dictate the ranking to select the minimum, the average or the maximum output (e.g., provide highest output for the employee). A rule can dictate the ranking of the modifiers with respect to the component values, preferring some of the modifiers over others.

The method can provide for display, to a user interface, ranking for the plurality of modifiers to use for modifying the plurality of component values. The method can include receiving, via the user interface, an input associated with the ranking. The method can include modifying the one or more rules for ranking the plurality of modifiers based on the input. The one or more modifiers can include a plurality of modifiers corresponding to a plurality different rates of resources to combine with a plurality of components of the one or more components. In some implementations, the method can provide, via the user interface, options for a system user, practitioner or administrator to adjust the ranking of modifiers, or to edit component values prior to final computation by the remote resource operating system. Such practitioner input can be incorporated in real time, allowing the system to dynamically update resource allocations and compensation calculations based on user selections.

At 930, adjusted parameter values can be generated based on modified component values. For instance, the method can include the data processing system generating one or more adjusted parameter values for the time interval, using the one or more component values adjusted using the one or more modifiers according to the at least one of the first rate or the second rate. The method can include the one or more processors generating one or more adjusted parameter values for the time interval using the one or more component values adjusted using the one or more modifiers. The method can include determining that the ranking of the one or more modifiers according to a rule of the one or more rules results in an adjusted parameter value of the one or more adjusted parameter values. Such adjusted parameter value can be lower than a second adjusted parameter value determined according to a second ranking of the one or more modifiers according to a second rule of the one or more rules. The method can include assigning the one or more modifiers to the one or more component values according to the second rule (e.g., to compute the adjusted parameter values according to a rule that provides a higher output).

At 935, resource processing system can be commanded to execute a resource process using adjusted component value. The method can include the data processing system commanding a processing system to execute a process to determine, using the one or more adjusted parameter values, an amount of resources to apply to the client account for the time interval. The method can include the one or more processors commanding the resource processing system to execute a resource process for the client account and the time interval based on the one or more adjusted parameter values. For example, a command generator can generate a command to the resource processing system along with the generated adjusted parameter value and instruct the resource processing system to use the adjusted parameter value for the resource process requested by the entity system.

The resource process can be configured to update an accumulated parameter value using the value for the parameter or the adjusted parameter value. The updated accumulated parameter value can correspond to the plurality of time intervals and the time interval. For instance, the updated accumulated parameter value can include the last time interval for which the resource processing has been completed and add that value to the prior cumulative value to generate the updated (e.g., most recent) accumulated value. The method can include the command generator generating the command configured to cause the resource process to determine an amount of resources to apply to the client account. For instance, the command generator can direct the resource processing system to utilize a resource process for computing the wage for the electronic account to deposit the amount of resources according to the determined wage onto the electronic account of the employee. For example, the method can include the command generator generating the command using or including the one or more component values and the one or more modifiers.

At 940, the method can include storing the amount of resources determined by the processing system. The amount of resources can be determined, responsive to the command by the data processing system, by a remote system executing resource processes. The data processing system can include receiving the amount of resources from the remote resource processing system, via the network, and storing the amount of resources for the time interval in a memory location associated with the electronic account of the client. For example, the system can receive a calculated payroll amount from the remote resource processing system after completion of the payroll computation for a given pay period. This amount can then be written to a designated memory location within the data repository, linking the resource allocation to the electronic account of the client or user and to the time interval for future reference or processing. Each stored resource allocation can be indexed by client account and time interval, allowing for auditing and review, or future reporting.

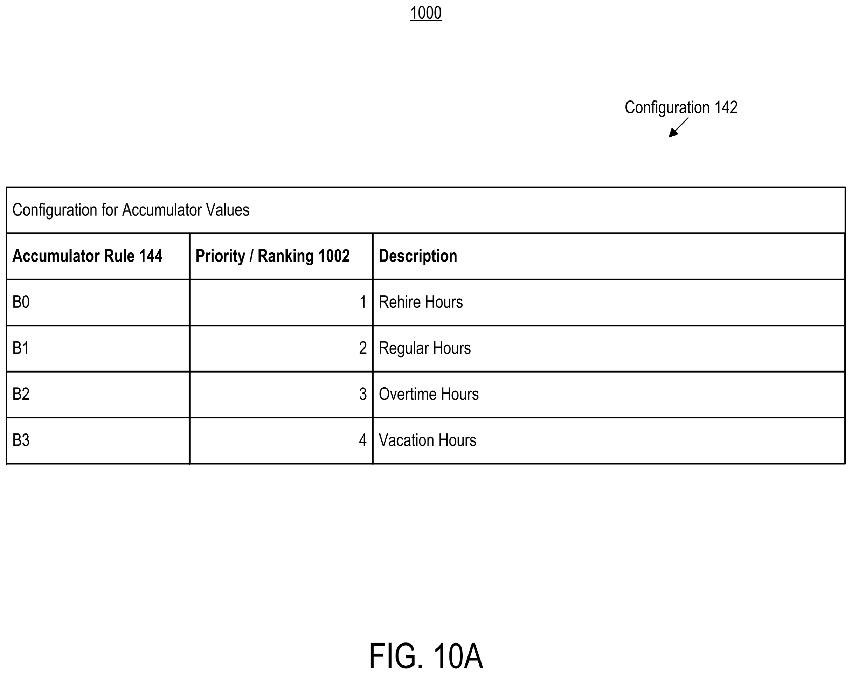

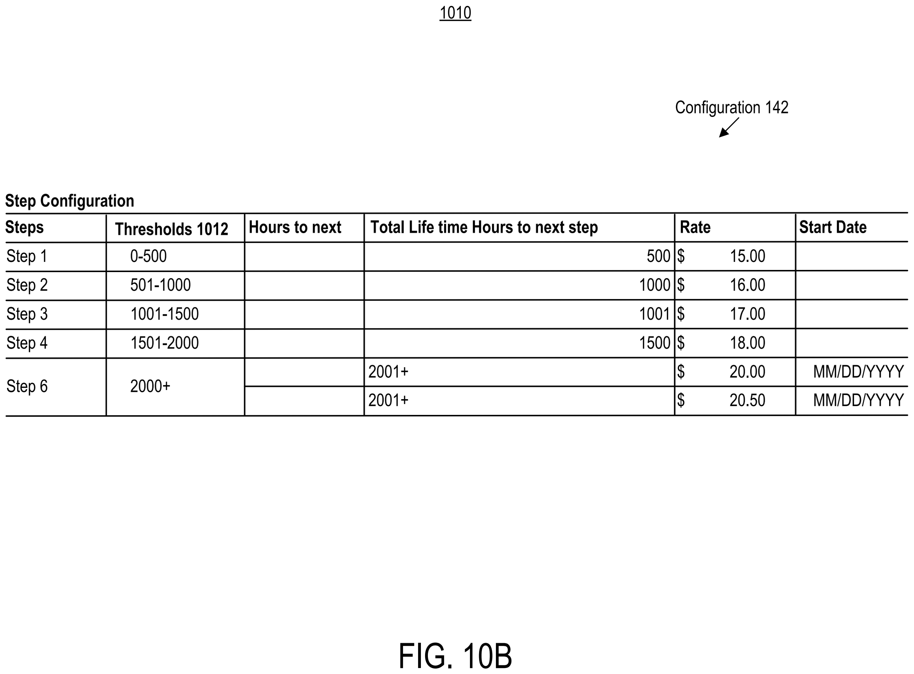

FIG. 10A illustrates an example view 1000 of a configuration 143 for accumulator values and associated prioritization rules, as utilized together with the step progression compensation system shown in FIG. 10B. In FIG. 10A, the configuration 142 can include a set of rules 144 (e.g., accumulator rules 144), each of which can define its own priority or ranking 1002 for a different class of resources (e.g., employee worked hours), including for example rehire hours (B0), regular hours (B1), overtime hours (B2), and vacation hours (B3). The configuration 142 can provide a structure, configured as a table, to allow for the system to categorize and process resources (e.g., time entries) according to their designated type, and its rules 144 and ranking 1002, facilitating the compensation calculations to reflect the correct prioritization order as specified by the entity or practitioner.

FIG. 10B illustrates an example view 1010 of a configuration 142 for step progression, as utilized together with the accumulator prioritization system shown in FIG. 10A. In FIG. 10B, the configuration 142 can include a set of thresholds 1012, each of which can define a specific point or threshold below which different rates can apply. For instance, the configuration 142 can include a step 1 with threshold hours of up to 500, for which a rate of $15 is applied, and a step 2 with threshold hours of up to 1000 hours (e.g., 501 hours through 1000 hours) for which a rate of $16 per hour applies. Accordingly, the configuration can have a corresponding range of hours to the next step, a total lifetime hours threshold, and an assigned compensation rate, as well as an effective start date. The configuration 142 can provide a structure, configured as a table, to allow for the system to automate compensation adjustments by transitioning associates to higher compensation levels as their accumulated hours surpass defined limits.

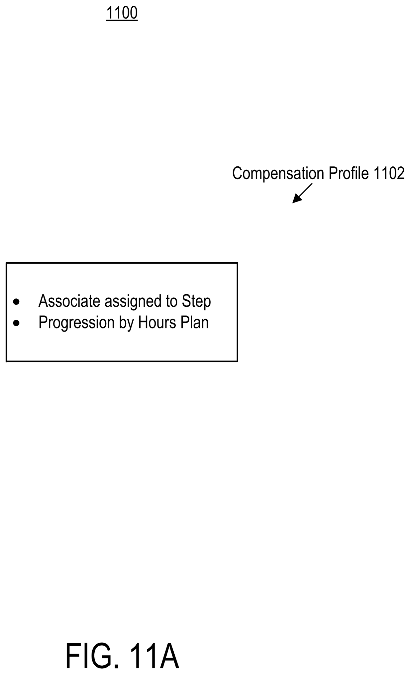

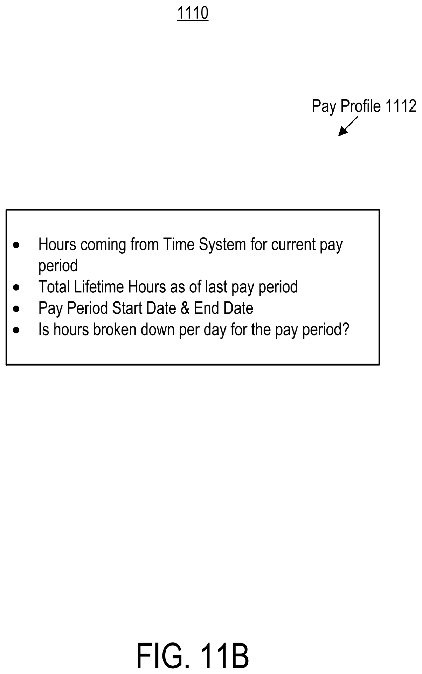

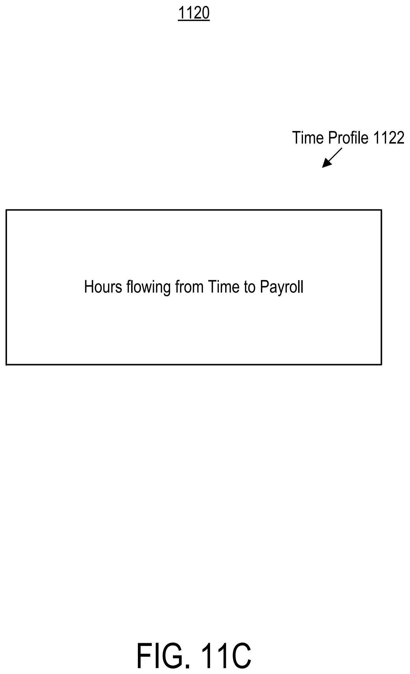

FIGs. 11A, 11B, and 11C illustrate example views 1100, 1110, and 1120, respectively, of data profiles and flows utilized in the step progression compensation system. In FIG. 11A, view 1100 shows a compensation profile 1102 that can include information indicating that an associate is assigned to a step progression by hours plan, allowing the system to track and manage compensation eligibility and advancement based on accumulated work hours. FIG. 11B depicts a view 1110 with a pay profile 1112, which can include data such as hours coming from the time system for the current pay period, total lifetime hours as of the last pay period, pay period start and end dates, and whether hours are broken down per day for the pay period. This structure allows the system to accurately capture and process time-related data for each associate, supporting precise compensation calculations. FIG. 11C shows a view 1120 with a time profile 1122, which can represent the flow of hours from the time system to the payroll system, to integrate the time entries into the payroll process for resource determination.

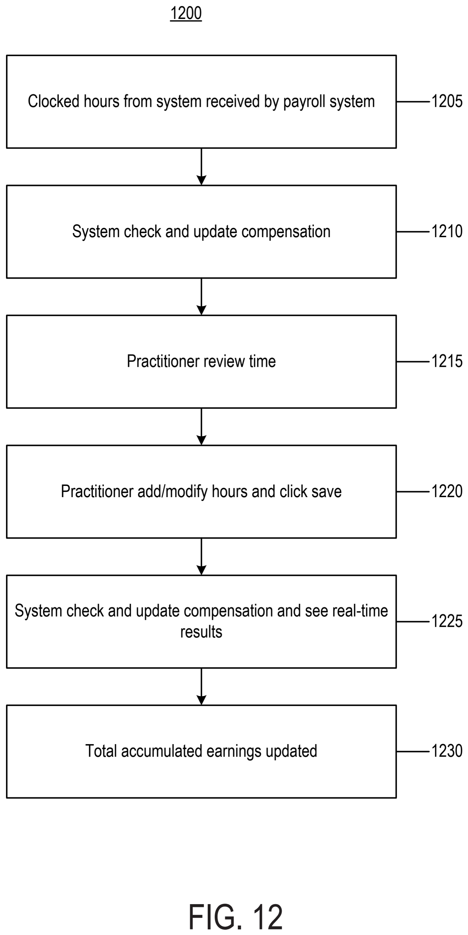

FIG. 12 illustrates an example method flow 1200 for step progression resource processing. Any acts or operations of method 1200 can be implemented using, for example, the system of FIG. 1, including the data processing system 120. The acts or operations of method 1200 can be combined any acts or operations of method 900, and vice versa. At act 1205, the resources (e.g., clocked hours) of a user or an associate can received from the time system and imported into the data processing system. This initial data capture can include any payroll data, such as associate work hours for the current pay period, which can be made available for subsequent processing, as described in the time profiles of FIGs. 11A-11C.

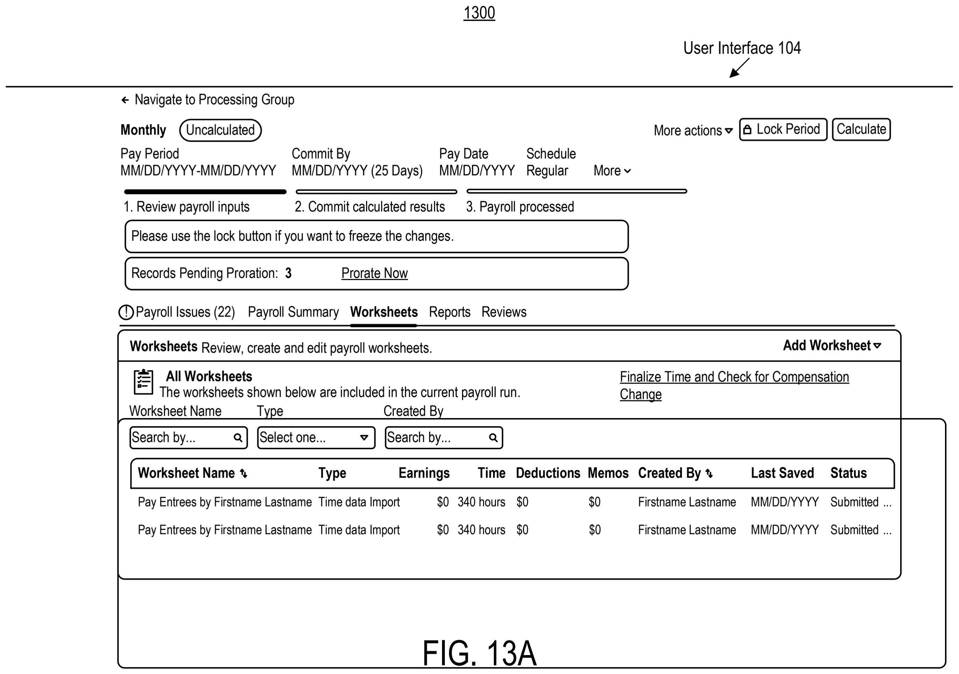

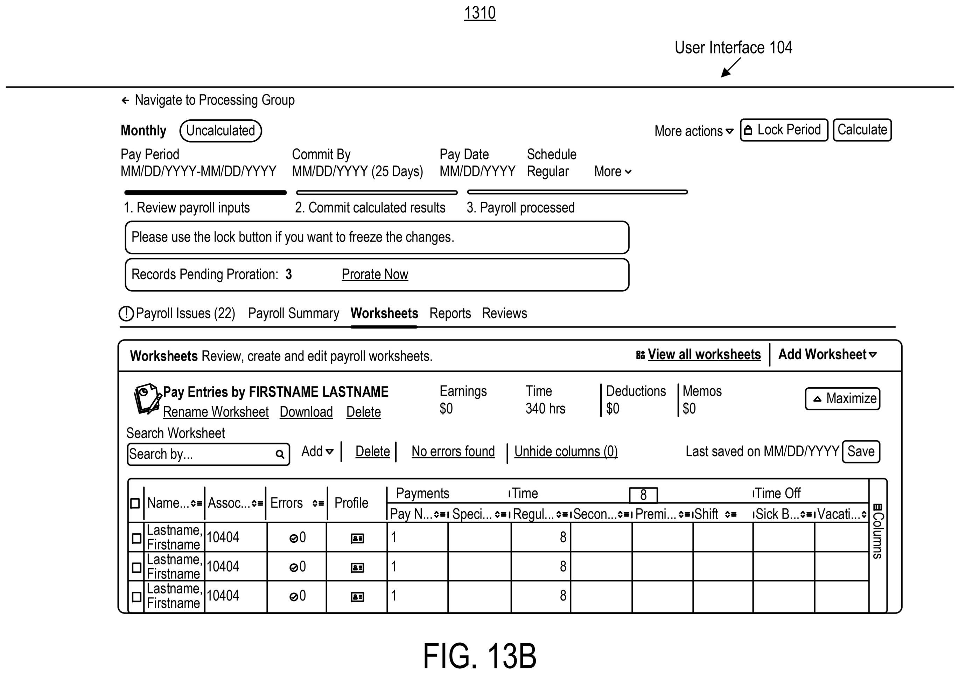

At 1210, the method can check and update the compensation eligibility by referencing the accumulator configuration and step progression thresholds, such as those discussed in connection with FIGs. 10A and 10B. If a user's accumulated hours (e.g., associate hours) cross a defined threshold, the method can automatically trigger a compensation adjustment, applying the appropriate rate and step as configured. This eligibility check can be implemented using a pay profile data, such as the one shown in FIG. 11B and the worksheet and payroll summary interfaces of FIGs. 13A and 13B.

At 1215, the method can provide outputs for practitioner review, where a payroll administrator or a human resources (HR) practitioner can examine the imported hours and compensation status, making any necessary modifications. At 1220, the practitioner can add or modify hours and click save, prompting the system to re-check and update compensation in real time. This interactive review and edit process can be facilitated by the user interface screens depicted in FIGs. 13A-13D, which allow for direct input, validation, and confirmation of payroll data. At 1225, the system updates total accumulated earnings for the associate, ensuring that all changes are reflected in the payroll records and compensation calculations. The updated earnings and compensation status are then committed to the payroll cycle, supporting accurate pay, auditability, and compliance with step progression rules.

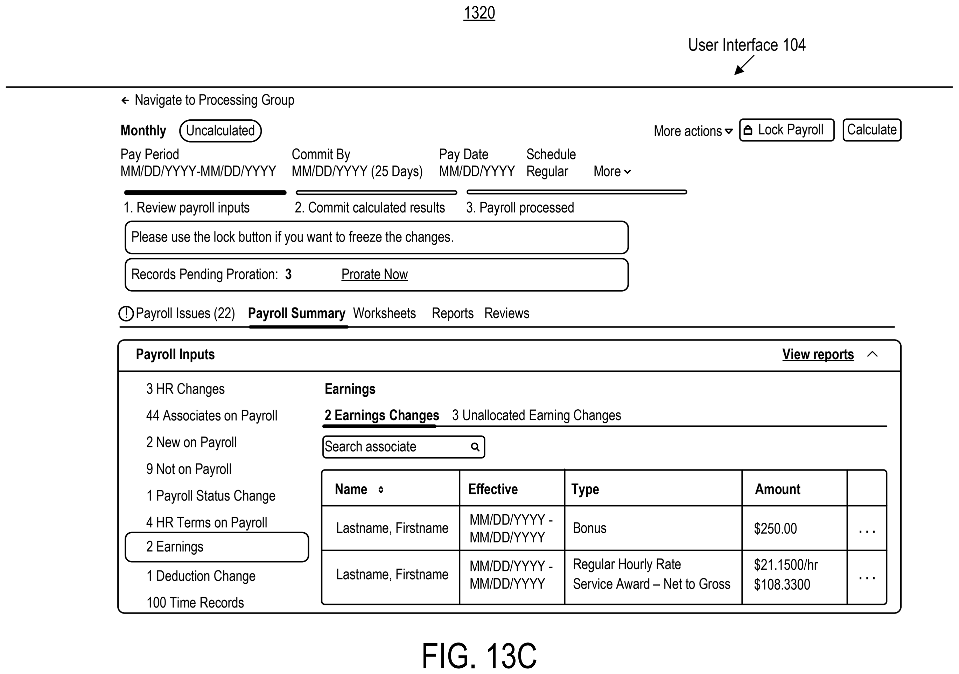

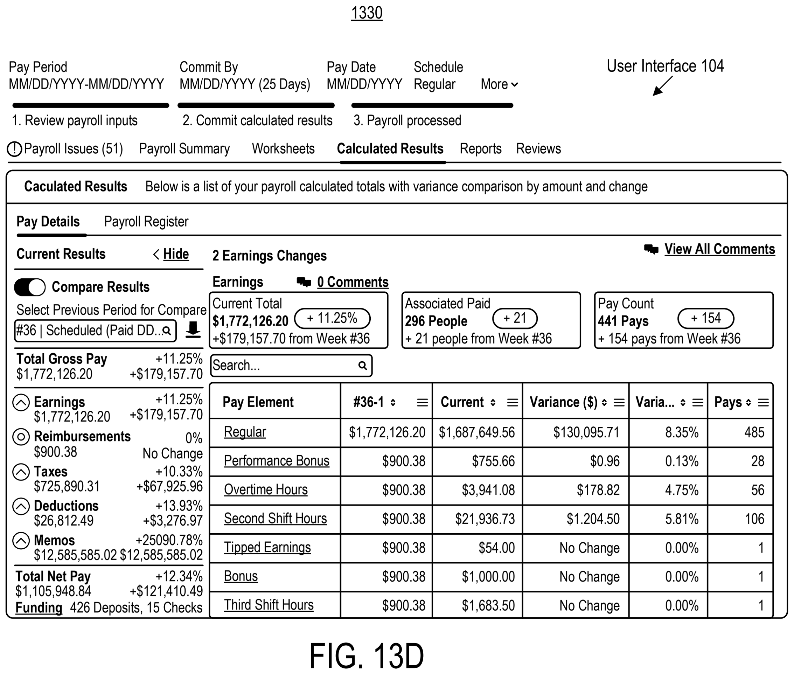

FIGs. 13A-D illustrate an example views of user interface 104, providing practitioner-facing screens for payroll and compensation management. FIG. 13A shows a view 1300 with a payroll run summary, where users can review pay period details, worksheet status, and initiate payroll actions such as calculation and commit. FIG. 13B shows a view 1310 presenting a worksheet management interface, allowing practitioners to view, edit, and validate individual pay entries, including earnings, time, and deductions for each associate. FIG. 13C shows a view 1320, highlighting payroll input and change tracking, displaying pending proration records, HR changes, and payroll status updates, supporting real-time oversight and error resolution. FIG. 13D shows view 1330 that can provide a calculated results dashboard, summarizing total gross pay, earnings changes, and variance comparisons across pay periods, allowing users to analyze payroll outcomes and ensure compliance with compensation progression rules.

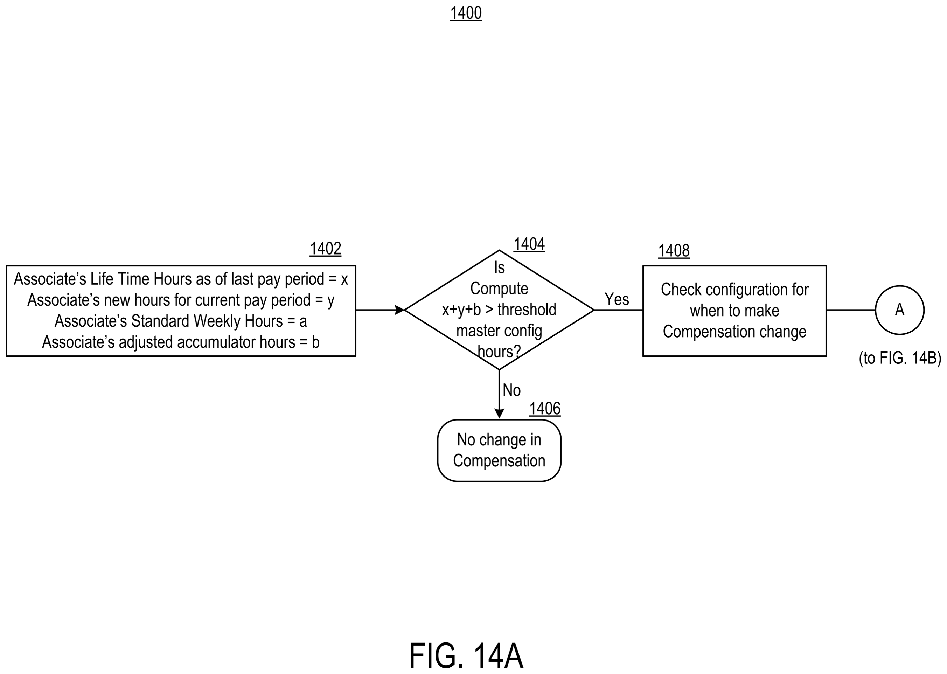

FIGs. 14A-14C illustrate an example flow diagram for step progression compensation processing, starting with the initialization of variables and progressing through the decision logic for compensation changes. In FIG. 14A, at view 1400, the method can begin at act 1402 by determining a user's or associate's accumulated hours (e.g., lifetime hours) as of the last pay period, the new hours for the current pay period, the standard weekly hours, and any adjusted accumulator hours. These values can be used to compute the total hours relevant for compensation eligibility.

At act 1404, a determination can be made as to whether the sum of associate lifetime hours, the associate's new hours, and adjusted accumulator hours exceeds a threshold configuration hours. If the threshold is not exceeded at act 1404, act 1406 provides that no change in compensation is to be implemented. If the threshold at 1404 is exceeded, at act 1408, the method directs to check the configuration for when to make the compensation change.

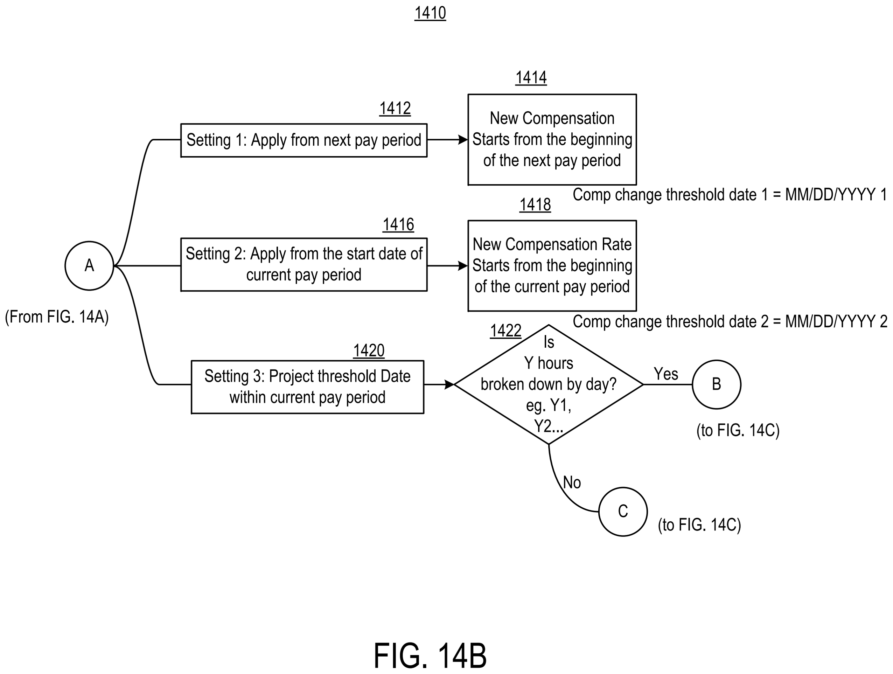

The flow then proceeds to a decision point, where the system checks whether the sum of lifetime hours, new hours, and adjusted accumulator hours exceeds the threshold defined in the master configuration (act 1410, FIG. 14B). If the threshold is not crossed, no change in compensation is made, and the process can return to regular payroll processing. If the threshold is exceeded, the method advances to compensation change logic, referencing the step progression configuration and projection settings.

At this stage, the system evaluates which compensation setting to apply-such as applying the new rate from the next pay period (setting 1), from the start date of the current pay period (setting 2), or projecting the threshold date within the current pay period (setting 3) (acts 1412-1422, FIG. 14B). The method also determines whether the new hours are broken down by day, which influences how the threshold date is calculated and how rates are applied to specific portions of the pay period.

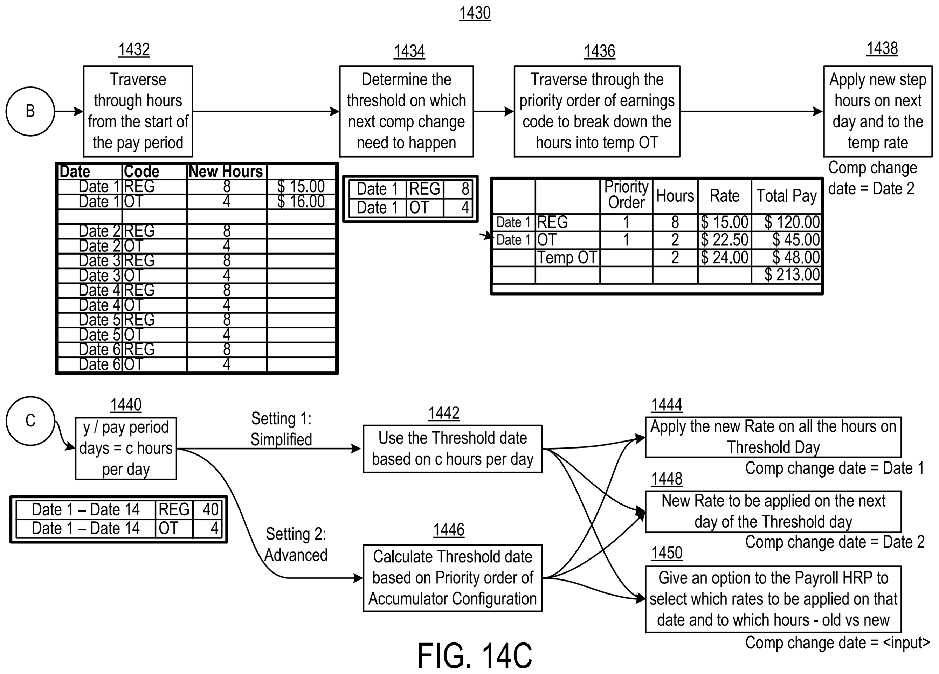

In FIG. 14C (view 1430), the flow continues by traversing through the hours from the start of the pay period (act 1432), calculating the average hours per day if daily breakdowns are not available (act 1434), and determining the exact threshold on which the next compensation change should occur (act 1436). The system then traverses the priority order of earnings codes to break down the hours into temporary overtime or other categories (act 1438), ensuring that each portion of hours is assigned the correct rate and step.

Once the compensation change date is established, the system applies the new step hours and rates to the appropriate segments of the pay period (acts 1440-1442), updating the associate's compensation profile and payroll records accordingly. The method can also provide options for the payroll practitioner to select which rates to apply on specific dates and to which hours-old versus new-offering flexibility for manual overrides or special scenarios (acts 1444-1446).

Finally, the flow concludes by committing the compensation changes to the payroll system (acts 1448-1450), ensuring that all updates are reflected in the associate's earnings and payroll history. Throughout this process, the system supports both automated and practitioner-driven adjustments, leveraging the configuration and prioritization logic established in earlier figures. The user interface screens shown in FIGs. 13A-13D can be used to review, validate, and finalize these compensation changes, providing transparency and control for payroll administrators.

Transitioning to FIG. 14B, at view 1410, the method can evaluate which compensation setting to apply, such as applying the new rate from the next pay period (setting 1) at 1412, or apply the new rate from the start date of the current pay period (setting 2) at 1416, or projecting the threshold date within the current pay period (setting 3) at 1420. At 1414, responsive to setting 1 at 1412, the new compensation is applied from the beginning of the next pay period, computing the current pay period according to a prior rate (e.g., rate below the threshold). At 1418, responsive to setting 2 at 1416, the new compensation is applied from the beginning of the current pay period, even if the threshold is not exceeded at the start of the current pay period, but rather in its middle or even end. At 1422, responsive to setting 3 at 1420, the hours can be broken or divided by days or any other groupings to determine or compute the number of hours within the current pay period for which to apply the first rate and the number of hours within the current pay period for which to apply the second rate. Accordingly, acts 1412 through 1422 guide the system through the various settings or options, including determining whether the new hours are broken down by day, which influences how the threshold date is calculated and how rates are applied to specific portions of the pay period.

In FIG. 14C, at view 1430, the flow continues by traversing through the hours from the start of the pay period (act 1432), calculating the average hours per day if daily breakdowns are not available (act 1434), and determining the exact threshold on which the next compensation change should occur (act 1436). The system then traverses the priority order of earnings codes to break down the hours into temporary overtime or other categories (act 1438), allowing for each portion of hours to be assigned the correct rate and step.

Once the compensation change date is established, the method can apply the new step hours and rates according to the selected projection setting. For setting 1 (acts 1440-1442), the method can apply the new compensation rate to all hours starting from the beginning of the next pay period. At act 1440, the method can identify the threshold day and, at act 1442, apply the new rate to all hours on and after that threshold day, updating the associate's compensation profile and payroll records to reflect the change. The practitioner can be presented with options at act 1444 to select which rates to apply on specific dates and to which hours, allowing for manual adjustments if, for example, a portion of hours on the threshold day should remain at the old rate due to contractual or regulatory requirements. After practitioner input, the method can finalize the compensation change at act 1448, committing the updated rates and hours to the payroll system, and at act 1450, record the changes in the associate's payroll history for audit and compliance purposes.

For setting 2 (acts 1440-1446), the method can apply the new compensation rate from the start date of the current pay period. At act 1440, the method can determine the relevant pay period start date, and at act 1446, apply the new rate to all hours from that date forward, regardless of when the threshold is crossed within the period. As with setting 1, act 1444 can allow the practitioner to select or override which rates are applied to specific hours or dates, providing flexibility for special scenarios such as retroactive adjustments or exceptions. Once practitioner selections are confirmed, the method can proceed to act 1448 to commit the compensation changes and act 1450 to update the payroll records, such that all adjustments are accurately reflected in the associate's compensation profile and payroll history.

The foregoing examples have been provided merely for the purpose of explanation and are in no way to be construed as limiting of the present description. While aspects of the technical solutions described herein have been described with reference to an exemplary embodiment, it is understood that the words which have been used herein are words of description and illustration, rather than words of limitation. Changes can be made, within the purview of the appended claims, as presently stated and as amended, without departing from the scope and spirit of the technical solutions described herein in their aspects. Although aspects of the technical solutions have been described herein with reference to particular means, materials and embodiments, the present description is not intended to be limited to the particulars described herein; rather, the technical solutions described herein extend to all functionally equivalent structures, methods and uses, such as are within the scope of the appended claims.

Although an example computing system has been described in FIG. 9, the subject matter including the operations described in this specification can be implemented in other types of digital electronic circuitry, or in computer software, firmware, or hardware, including the structures described in this specification and their structural equivalents, or in combinations of one or more of them.

Some of the description herein emphasizes the structural independence of the aspects of the system components or groupings of operations and responsibilities of these system components. Other groupings that execute similar overall operations are within the scope of the present application. Modules can be implemented in hardware or as computer instructions on a non-transient computer readable storage medium, and modules can be distributed across various hardware or computer-based components.

The systems described above can provide multiple ones of any or each of those components and these components can be provided on either a standalone system or on multiple instantiation in a distributed system. In addition, the systems and methods described above can be provided as one or more computer-readable programs or executable instructions embodied on or in one or more articles of manufacture. The article of manufacture can be cloud storage, a hard disk, a CD-ROM, a flash memory card, a PROM, a RAM, a ROM, or a magnetic tape. In general, the computer-readable programs can be implemented in any programming language, such as LISP, PERL, C, C++, C#, PROLOG, or in any byte code language such as JAVA. The software programs or executable instructions can be stored on or in one or more articles of manufacture as object code.

The subject matter and the operations described in this specification can be implemented in digital electronic circuitry, or in computer software, firmware, or hardware, including the structures described in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device", "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently described systems or methods, their components, acts, or elements to single or plural configurations. References to any act or element being based on any information, act or element may include implementations where the act or element is based at least in part on any information, act, or element.

Any implementation described herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations described herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the described elements and operations without departing from the scope of the technical solutions described herein.

References to "approximately," "substantially", or other terms of degree include variations of +/-10% from the given measurement, unit, or range unless explicitly indicated otherwise. Coupled elements can be electrically, mechanically, or physically coupled with one another directly or with intervening elements. Scope of the Systems and methods described herein is thus indicated by the appended claims, rather than the foregoing description, and changes that come within the meaning and range of equivalency of the claims are embraced therein.

## Claims

1. A system, comprising:
one or more processors coupled with memory to:
receive a value for a parameter of a client account associated with a processing system, the parameter associated with a time interval of a plurality of time intervals;
determine, based on a configuration for an entity associated with the client account, to perform parameter adjustment according to a protocol of the configuration, wherein the protocol utilizes: (i) a setting identifying a first rate for a first range of values of the parameter and a second rate for a second range of values of the parameter, and (ii) a threshold value for the parameter to select between the first rate and the second rate based on an accumulated value of the parameter over the plurality of time intervals;
split, using the setting and the threshold value, and based on the accumulated parameter value of the client account for the plurality of time intervals, the value for the parameter into a plurality of component values;
assign, according to a ranking associated with a plurality of modifiers, one or more modifiers of the plurality of modifiers to one or more component values of the plurality of component values, wherein the one or more modifiers are associated with at least one of the first rate or the second rate;
generate, using the one or more component values adjusted using the one or more modifiers according to the at least one of the first rate or the second rate, one or more adjusted parameter values for the time interval;
command the processing system to execute a process to determine, using the one or more adjusted parameter values, an amount of resources to apply to the client account for the time interval; and
store the amount of resources for the time interval in a memory location associated with the client account.

2. The system of claim 1, wherein the one or more processors are configured to:
identify, for the client account, a plurality of values comprising the value for a plurality of parameters comprising the parameter, the plurality of parameters corresponding to the plurality of time intervals; and
determine, based on the plurality of values and the configuration of the entity, to perform parameter adjustment; and optionally
wherein parameter adjustment includes modifying one or more component values of the plurality of component values, wherein a sum of the plurality of component values is equal to the value for the parameter received from an entity system.

3. The system of any preceding claim, wherein the one or more processors are configured to:
provide for display, to a user interface, ranking for the plurality of modifiers to use for modifying the plurality of component values;
receive, via the user interface, an input associated with the ranking; and
modify the ranking of the plurality of modifiers based on the input; and/or
wherein the one or more processors are configured to:
identify a regulation corresponding to a geographical area;
detect that the client account corresponds to the geographical area;
select, responsive to the detection, the protocol.

4. The system of any preceding claim, wherein the one or more processors are configured to:
determine that the ranking of the one or more modifiers results in an adjusted parameter value of the one or more adjusted parameter values that is lower than a second adjusted parameter value determined according to a second ranking of the one or more modifiers; and
assign the one or more modifiers to the one or more component values responsive to the adjusted parameter value being lower than the second adjusted parameter value.

5. The system of any preceding claim, wherein the one or more processors are configured to:
provide for display, to a user interface, the plurality of component values;
receive, via the user interface, an input corresponding to at least a component value of the plurality of component values; and
modify at least the component value based on the input.

6. The system of any preceding claim, wherein the process is configured to update the accumulated parameter value using the value for the parameter, the updated accumulated parameter value corresponding to the plurality of time intervals and the time interval.

7. The system of any preceding claim, wherein the value for the parameter corresponds to a number of hours worked for the entity within the time interval corresponding to a pay cycle and the accumulated parameter value corresponds to a sum of hours worked for the entity within the plurality of time intervals corresponding to a fiscal year; and optionally
wherein the one or more modifiers include a plurality of modifiers corresponding to a plurality of rates of resources to combine with a plurality of components, wherein the plurality of rates comprise the first rate and the second rate.

8. The system of any preceding claim, wherein the one or more processors are configured to:
generate, using the one or more component values and the one or more modifiers, a command configured to cause the process to determine the amount of resources according to a setting that (i) generates the one or more component values according to the first rate corresponding to a beginning of the time interval, (ii) generates the one or more component values according to the second rate corresponding to an end of the time interval, or (iii) generates, based on the threshold value, a first component value of the one or more component values according to the first rate and a second component value of the one or more component values according to the second rate.

9. A method, comprising:
receiving, by one or more processors coupled with memory a value for a parameter of a client account associated with a processing system, the parameter associated with a time interval of a plurality of time intervals;
determining, by the one or more processors, based on a configuration for an entity associated with the client account, to perform parameter adjustment according to a protocol of the configuration, wherein the protocol utilizes: (i) a setting identifying a first rate for a first range of values of the parameter and a second rate for a second range of values of the parameter, and (ii) a threshold value for the parameter to select between the first rate and the second rate based on an accumulated value of the parameter over the plurality of time intervals;
splitting, by the one or more processors, using the setting and the threshold value, and based on the accumulated parameter value of the client account for the plurality of time intervals, the value for the parameter into a plurality of component values;
assigning, by the one or more processors, according to a ranking associated with a plurality of modifiers, one or more modifiers of the plurality of modifiers to one or more component values of the plurality of component values, wherein the one or more modifiers associated with at least one of the first rate or the second rate;
generating, by the one or more processors, using the one or more component values adjusted using the one or more modifiers according to the at least one of the first rate or the second rate, one or more adjusted parameter values for the time interval;
commanding, by the one or more processors, the processing system to execute a process to determine, using the one or more adjusted parameter values, an amount of resources to apply to the client account for the time interval; and
storing, by the one or more processors, the amount of resources for the time interval in a memory location associated with the client account.

10. The method of claim 9, comprising:
identifying, by the one or more processors, for the client account, a plurality of values comprising the value for a plurality of parameters comprising the parameter, the plurality of parameters corresponding to the plurality of time intervals; and
determining, by the one or more processors, based on the plurality of values and the configuration of the entity, to perform parameter adjustment.

11. The method of claim 9 or 10, comprising:
modifying, by the one or more processors, one or more component values of the plurality of component values, wherein a sum of the plurality of component values is equal to the value for the parameter received from an entity system.

12. The method of any of claims 9 to 11, comprising:
providing, by the one or more processors, for display, to a user interface, ranking for the plurality of modifiers to use for modifying the plurality of component values;
receiving, by the one or more processors, via the user interface, an input associated with the ranking; and
modifying, by the one or more processors, the ranking of the plurality of modifiers based on the input.

13. The method of any of claims 9 to 12, comprising:
identifying, by the one or more processors, a regulation corresponding to a geographical area;
detecting, by the one or more processors, that the client account corresponds to the geographical area;
selecting, by the one or more processors, responsive to the detection, the protocol; and/or the method comprising:
determining, by the one or more processors, that the ranking of the one or more modifiers results in an adjusted parameter value of the one or more adjusted parameter values that is lower than a second adjusted parameter value determined according to a second ranking of the one or more modifiers; and
assigning, by the one or more processors, the one or more modifiers to the one or more component values responsive to the adjusted parameter value being lower than the second adjusted parameter value.

14. The method of any of claims 9 to 13, comprising:
providing, by the one or more processors, for display, to a user interface, the plurality of component values;
receiving, by the one or more processors, via the user interface, an input corresponding to at least a component value of the plurality of component values; and
modifying, by the one or more processors, at least the component value based on the input; and/or the method comprising:
updating, by the one or more processors, via the process, the accumulated parameter value using the value for the parameter, the updated accumulated parameter value corresponding to the plurality of time intervals and the time interval.

15. A non-transitory computer readable medium storing processor executable instructions that, when executed by one or more processors, cause the one or more processors to carry out the method of any of claims 9 to 14.
